# EUROPEAN PATENT APPLICATION

(11) **EP 4 089 387 A1**
(43) Date of publication of application: **16.11.2022**
(21) Application number: 20911435.4
(22) Date of filing: 23.12.2020
(51) Int. Cl.: G01L 3/10, B62D 6/10, G01L 5/22, G01L 19/14

(54) **SENSING DEVICE**

(30) Priority: 07.01.2020 KR 20200002119; 08.01.2020 KR 20200002742; 08.01.2020 KR 20200002743; 08.01.2020 KR 20200002745
(71) Applicant: LG Innotek Co., Ltd., Seoul 07796 (KR)
(72) Inventor: CHOI, Ho Min, Seoul 07796 (KR); KIM, Sung Min, Seoul 07796 (KR); KIM, Yu Na, Seoul 07796 (KR); YANG, Jong Yeop, Seoul 07796 (KR)
(74) Representative: DREISS Patentanwälte PartG mbB
(86) International application number: PCT/KR2020/018994
(87) International publication number: WO 2021/141298

(57) **Abstract**

An embodiment may provide a sensing device comprising: a stator; and a rotor including a magnet, wherein the stator comprises a first stator tooth, a second stator tooth, and a collector disposed between the first stator tooth and the second stator tooth, and the collector comprises a first collector and a second collector having a different length from the first collector.

## Description

### [Technical Field]

Embodiments relate to a sensing device.

### [Background Art]

A power steering system (hereinafter referred to as an electronic power system (EPS)) drives a motor through an electronic control unit according to driving conditions to ensure turning stability and provide a quick restoring force, thereby enabling a driver to drive safely.

In order to provide appropriate torque, an EPS includes a sensor assembly that measures a torque, a steering angle, and the like of a steering shaft. The sensor assembly may include a torque sensor for measuring torque applied to the steering shaft and an index sensor for measuring angular acceleration of the steering shaft. The steering shaft may include an input shaft connected to a handle, an output shaft connected to a power transmission component at a steering wheel, and a torsion bar connecting the input shaft and the output shaft.

The torque sensor measures a degree of torsion of the torsion bar to measure the torque applied to the steering shaft. The index sensor detects the rotation of the output shaft to measure the angular acceleration of the steering shaft. In the sensor assembly, both the torque sensor and the index sensor may be disposed and integrally formed.

The torque sensor may include a housing, a rotor, a stator including a stator tooth, and a collector to measure the torque.

In this case, the torque sensor may have a magnetic type structure and may be provided in a structure in which the collector is disposed outside the stator tooth.

However, when an external magnetic field is generated, since the collector serves as a passage for the external magnetic field in the structure, there is a problem in that the external magnetic field affects a magnetic flux value of a Hall integrated circuit (IC). Accordingly, a change in output value of the torque sensor occurs, and thus there is a problem in that the degree of torsion of the torsion bar cannot be accurately measured.

In particular, since, as the number of electrical components increases in a vehicle, a case increases in which a torque sensor may be affected by an external magnetic field, there is a need for a torque sensor that is not affected by an external magnetic field.

A sensor is mounted on a board. The board is fixed to a middle housing. The board is fixed to the middle housing, and then a lower housing covers the board. However, such a board fixing structure has problems in that a housing structure is complicated, the number of assembly processes is increased, and a support structure for a sensor is weak.

In addition, an annular collector may be manufactured by performing drawing on a plate, and when the collector is manufactured through a drawing method, additional processing is required several times, and thus, there are problems in that a manufacturing process is complicated, and a loss of a material is great.

### [Disclosure]

### [Technical Problem]

The present invention is directed to providing a sensing device capable of avoiding magnetic field interference caused by an external magnetic field generated from the outside during torque measurement.

The present invention is directed to providing a sensing device of which an output value does not significantly change in response to a rotation angle even when a center of a collector is not aligned with a center of a stator tooth.

The present invention is directed to providing a sensing device in which the number of parts is reduced and which is capable of firmly supporting a sensor.

The present invention is directed to providing a sensing device of which a collector manufacturing process is simplified and which is capable of reducing a loss of a collector material.

Objectives to be solved by embodiments are not limited to the above-described objectives, and other objectives, which are not described above, may be clearly understood by those skilled in the art through the following specification.

According to an embodiment of the present invention, a sensing device includes a stator, and a rotor including a magnet, wherein the stator includes a first stator tooth, a second stator tooth, and a collector disposed between the first stator tooth and the second stator tooth, and the collector includes a first collector and a second collector having a length that is different from that of the first collector.

According to an embodiment of the present invention, a sensing device includes a stator, and a rotor including a magnet, wherein the stator includes a first stator tooth, a second stator tooth, and a collector disposed between the first stator tooth and the second stator tooth, the collector includes a first collector and a second collector, the first collector includes a first area including a flat surface and a second area including a curved surface, the second collector includes a third area including a flat surface and a fourth area including a curved surface, and the first area and the third area are disposed to correspond to each other.

The first collector may include a first area including a flat surface and a second area including a curved surface, the second collector may include a third area including a flat surface and a fourth area including a curved surface, and the first area and the third area may be disposed to correspond to each other.

The first stator tooth may have a radius that is greater than that of the second stator tooth.

The first collector may have a radius that is greater than that of the second collector, and the sensing device may include a sensor disposed between the first collector and the second collector.

The first area and the third area may be parallel to each other.

The flat surface of the first area may include a first flat surface and a second flat surface, and an angle formed by the first flat surface and the second flat surface may be in a range of 140° and 160°.

The sensor may be disposed between the flat surface of the first area and the flat surface of the third area.

The flat surface of the first area may be disposed within an angle formed by both ends and a center of the flat surface of the third area.

The first stator tooth may include a first body and a first tooth extending from the first body, the second stator tooth may include a second body and a second tooth extending from the second body, and the first tooth of the first stator tooth and the second tooth of the second stator tooth may overlap each other in a radial direction.

The sensor may include a first sensor, a second sensor, a third sensor, and a fourth sensor, the first to fourth sensors may be disposed between the flat surface of the first area and the flat surface of the third area, the flat surface of the first area may include a first flat surface and a second flat surface, the flat surface of the third area may include a third flat surface and a fourth flat surface, the first and second sensors may be disposed between the first flat surface and the third flat surface, and the third and fourth sensors may be disposed between the second flat surface and the fourth flat surface.

According to an embodiment of the present invention, a sensing device includes a stator including a stator tooth, and a rotor including a magnet, wherein the stator tooth includes a first stator tooth and a second stator tooth disposed to overlap the first stator tooth in a radial direction from a center of the stator, the first stator tooth includes a first body, a plurality of first teeth protruding from the first body, and a plurality of first extension portions extending from the first body, the second stator tooth includes a plurality of second teeth, one of the plurality of first teeth is disposed to overlap one of the plurality of second teeth in the radial direction, and the first extension portion is disposed to overlap the magnet in an axial direction.

The first stator tooth may include a third tooth, and the third tooth may protrude from the first extension portion and may be disposed to overlap the magnet in the radial direction.

The third tooth may include a third-first tooth and a third-second tooth, the third-first tooth may protrude from any one area of the first extension portion, the third-second tooth may protrude from another area of the first extension portion, and the third-first tooth and the third-second tooth may be disposed apart from each other.

The third-first tooth and the third-second tooth may have the same shape.

The third tooth may include a groove that is formed to be concave from an end surface thereof.

The third tooth may include a hole passing through an inner surface and an outer surface of the third tooth.

The third-first tooth and the third-second tooth may be disposed such that a width thereof gradually increases toward the first extension portion.

The first stator tooth may include a first area in which the first extension portion is disposed between the first teeth in a circumferential direction and a second area in which the first extension portion is not disposed between the first teeth in the circumferential direction, and the first area and the second area may be alternately disposed in the circumferential direction.

The first stator tooth may include a third tooth, and the third tooth may protrude from the first extension portion and may be disposed to overlap the magnet in the radial direction.

The second stator tooth may include a second-first stator tooth including some of a plurality of second teeth and a second-second stator tooth including the rest of the plurality of second teeth, and the second-first stator tooth and the second-second stator tooth may be disposed apart from each other.

The first stator tooth may include a second extension portion extending from the first extension portion, and the second extension portion may be disposed to overlap the first body in the radial direction.

According to an embodiment of the present invention, a sensing device includes a stator including a first stator tooth and a second stator tooth, a rotor including a magnet, a collector disposed between the first stator tooth and the second stator tooth, a sensor disposed to correspond to the collector, a connector pin connected to an external power source, a plurality of plates configured to electrically connect the sensor and the connector pin, and a housing in which the collector and the connector pin are disposed, wherein the plate includes a first surface, a second surface, and a third surface of which positions are different from each other, and the first surface, the second surface, and the third surface are each in contact with the housing.

According to an embodiment of the present invention, a sensing device includes a stator including a first stator tooth and a second stator tooth, a rotor including a magnet, a collector disposed between the first stator tooth and the second stator tooth, a sensor disposed to correspond to the collector, a connector pin connected to an external power source, a plurality of plates configured to electrically connect the sensor and the connector pin, and a housing in which the collector and the connector pin are disposed, wherein the plurality of plates are disposed apart from each other, and the housing includes a partition wall disposed between the adjacent plates.

The first surface and the second surface may be disposed to face each other, and the third surface may connect the first surface and the second surface.

The first surfaces disposed in the plurality of plates may be disposed to be coplanar with each other.

The second surfaces disposed in the plurality of plates may be disposed to be coplanar with each other.

The partition wall may include a first partition wall disposed in a first direction and a second partition wall bent from the first partition wall and disposed in a second direction different from the first direction.

The sensor may include a first sensor and a second sensor, and the plate may include a first plate configured to connect the first sensor and the connector pin, a second plate configured to connect the second sensor and the connector pin, and a third plate configured to connect the first sensor and the second sensor and connect the connector pin.

The plate may include a first part disposed in a first direction and a second part bent from the first part and disposed in a second direction different from the first direction.

At least one of the first part and the second part may be disposed as a plurality of parts.

The sensor may include a first sensor and a second sensor, the plate may include a plurality of first holes to which a lead line of the first sensor is connected and which are disposed along a first column and a plurality of second holes to which a lead line of the second sensor is connected and which are disposed along a second column, and the first column and the second column may be disposed to form an angle.

According to an embodiment of the present invention, a sensing device includes a stator, and a rotor including a magnet, wherein the stator includes a first stator tooth, a second stator tooth, and a collector disposed between the first stator tooth and the second stator tooth, the collector is formed so that one end portion and the other end portion of the collector are connected in contact with each other, and the one end portion and the other end portion are disposed to overlap each other in a first direction.

A first direction may be a width direction of the collector, and the collector may include a protrusion protruding from the other end portion and a groove which is formed to be concave from the one end portion and in which the protrusion is disposed.

The protrusion may include an area having a width that is greater than a width of a portion of the protrusion connected to the other end portion.

The collector may include a first area including a flat surface and a second area including a curved surface, and a width of the one end portion and a width of the other end portion may be greater than a width of the first area and a width of the second area.

The one end portion and the other end portion may be disposed to overlap each other in the first direction as well as a second direction different from the first direction.

The first direction may be a radial direction of the collector, and an overlap area of the one end portion and the other end portion may be a flat surface.

The collector may include a third area and a fourth area having a thickness that is different from that of the third area.

The first direction may be a radial direction of the collector, the one end portion may include a fifth area and a sixth area which are disposed to overlap each other in the first direction, and the other end portion may include a seventh area and an eighth area which are disposed to overlap in the first direction.

The one end portion and the other end portion may be alternately disposed in the radial direction.

The one end portion and the other end portion may have ring structures which engage each other.

### [Advantageous Effects]

In a sensing device having the above configuration according to embodiments, since collectors are disposed between one pair of stator teeth and a sensor is disposed between the collectors, it is possible to prevent or minimize magnetic field interference caused by an external magnetic field generated from the outside during torque measurement.

In addition, a first tooth of a first stator tooth and a second tooth of a second stator tooth disposed apart from each other in a radial direction are disposed to overlap each other, and a magnet is rotated between the first tooth and the second tooth, thereby charging the first tooth and the second tooth to have different poles.

In addition, there is an advantage in that a magnitude of a collected flux can be increased.

Furthermore, it is possible to prevent or minimize magnetic field interference caused by an external magnetic field generated to flow from the inside of a stator holder.

In addition, it is possible to prevent or minimize magnetic field interference caused by an external magnetic field introduced from a side surface of a sensing device.

Furthermore, according to embodiments, there is an advantage in that an output value does not significantly change in response to a rotation angle even when a center of a collector is not aligned with a center of a stator tooth.

In addition, according to embodiments, there is an advantage in that an amount of scrap is reduced in manufacturing a stator tooth and the assemblability of the stator tooth is improved.

Furthermore, there is an advantage in that the number of parts is reduced by removing a board.

In addition, there is an advantage in that the number of parts is reduced by removing a separate housing for covering a board.

Furthermore, it is possible to simplify a manufacturing process of a collector and reduce a loss of a collector material.

Various useful advantages and effects of embodiments may not be limited to the above-described effects and may be more easily understood through a process in which specific embodiments of the present invention are described.

### [Description of Drawings]

FIG. 1 is an exploded perspective view illustrating a sensing device according to a first embodiment.
FIG. 2 is a perspective view illustrating a stator of the sensing device.
FIG. 3 is a cross-sectional view illustrating the stator of the sensing device.
FIG. 4 is a plan view illustrating a stator body of the stator.
FIGS. 5 and 6 are cross-sectional views illustrating the stator body of the stator.
FIG. 7 is a side view illustrating a first stator tooth.
FIG. 8 is a side view illustrating a second stator tooth.
FIG. 9 is a plan view illustrating the first stator tooth, the second stator tooth, and a magnet.
FIG. 10 is a view illustrating a first pole and a second pole of the magnet.
FIG. 11 is a view illustrating a second angle.
FIG. 12 is a view illustrating a third angle.
FIG. 13 is a graph showing a flux according to a first angle, the second angle, and the third angle.
FIG. 14 is a perspective view illustrating an arrangement of the magnet with respect to the first stator tooth and the second stator tooth.
FIG. 15 is a perspective view illustrating the first stator tooth.
FIG. 16 is a perspective view illustrating the second stator tooth.
FIG. 17 is a plan view of the first stator tooth.
FIG. 18 is a plan view of the first stator tooth and the second stator tooth.
FIG. 19 is a view illustrating the first tooth, the second tooth, and a third tooth disposed on concentric circles.
FIG. 20 is a plan view of the first stator tooth and the second stator tooth which illustrates a flow of an external magnetic field introduced from the inside of a stator holder.
FIG. 21 is a cross-sectional view of the first stator tooth which illustrates a flow of an external magnetic field guided to the third tooth.
FIG. 22 is a perspective view illustrating a first collector.
FIG. 23 is a perspective view illustrating a second collector.
FIG. 24 is a plan view of the first collector, the second collector, and a sensor.
FIG. 25 is a view illustrating stator teeth and an external magnetic field avoidance state.
FIG. 26 is a view illustrating a housing and a collector.
FIG. 27 is a view illustrating the housing.
FIG. 28 is a view illustrating radial distances between the first stator tooth, the first collector, the second collector, and the second stator tooth.
FIG. 29 is a plan view of the collector.
FIG. 30 is a graph showing a change in measured torque caused by an external magnetic field in response to a rotation angle.
FIG. 31 is a view illustrating a first gear and a second gear which are engaged with a main gear.
FIG. 32 is a perspective view illustrating a stator of a sensing device according to a second embodiment.
FIG. 33 is a view illustrating a first stator tooth and a second stator tooth according to a first modified example.
FIG. 34 is a view illustrating the first stator tooth shown in FIG. 33.
FIG. 35 is a view illustrating a first stator tooth and a second stator tooth according to a second modified example.
FIG. 36 is a view illustrating the first stator tooth shown in FIG. 35.
FIG. 37 is a view illustrating a first stator tooth and a second stator tooth according to a third modified example.
FIG. 38 is a view illustrating the second stator tooth shown in FIG. 35.
FIG. 39 is a view illustrating a first stator tooth and a second stator tooth according to a fourth modified example.
FIG. 40 is a view illustrating the first stator tooth shown in FIG. 39.
FIG. 41 is a perspective view illustrating a sensor, a connector pin, and a plate.
FIG. 42 is a top-down view of the sensor, the connector pin, and the plate shown in FIG. 41.
FIG. 43 is a side cross-sectional view of the plate along line A-A of FIG. 42.
FIG. 44 is a side cross-sectional view of the plate along line B-B of FIG. 42.
FIG. 45 is a perspective view illustrating a first collector.
FIG. 46 is a perspective view illustrating a second collector.
FIG. 47 is an enlarged view illustrating one end portion and the other end portion of a collector.
FIG. 48 is a view illustrating one end portion and the other end portion of a collector according to another modified example.
FIG. 49 is a view illustrating one end portion and the other end portion of a collector according to still another modified example.
FIG. 50 is a view illustrating directionality of an external magnetic field with respect to stator teeth.
FIG. 51 is a view illustrating an avoidance state of a sensor with respect to an external magnetic field having z-axis directionality.
FIG. 52 is a graph showing a comparison between changes in angle of Comparative Example and Example in response to an external magnetic field in a z-axis direction.
FIG. 53 is a graph showing a comparison between changes in angle of Comparative Example and Example in response to an external magnetic field in a y'-axis direction.

### [Modes of the Invention]

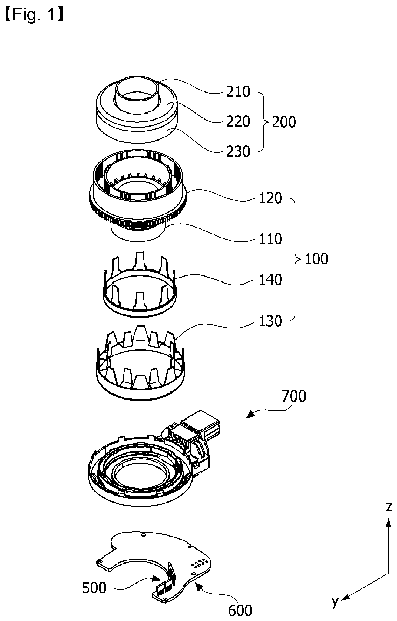

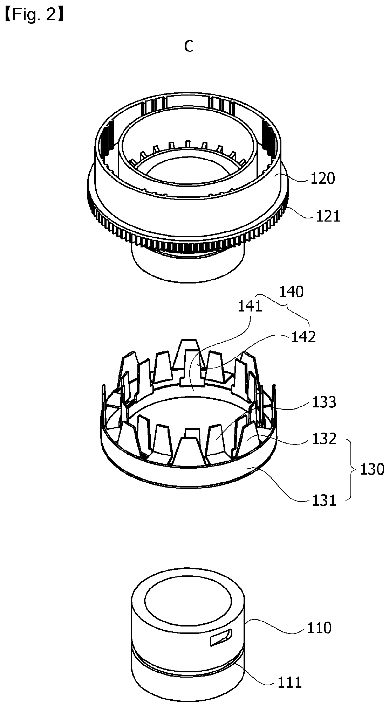

FIG. 1 is an exploded perspective view illustrating a sensing device according to an embodiment, and FIG. 2 is a perspective view illustrating a stator of the sensing device according to the embodiment. In FIGS. 1 and 2, a z-direction is an axial direction, and a y-direction is a radial direction. The axial direction and the radial direction are perpendicular to each other.

Referring to FIGS. 1 and 2, the sensing device according to the embodiment may include a stator 100, a rotor 200 partially disposed in the stator 100, a sensor 500, a circuit board 600 electrically connected to the sensor 500, and a housing 700 to which the circuit board 600 is coupled.

Here, the stator 100 may be connected to an output shaft (not shown), and the rotor 200, of which at least a portion is rotatably disposed in the stator 100, may be connected to an input shaft (not shown), but the present invention is not necessarily limited thereto.

In this case, the rotor 200 may be disposed to be rotatable with respect to the stator 100. Hereinafter, an inner side may be a side in a direction toward a center C with respect to the radial direction, and an outer side may be a side in a direction opposite to the inner side.

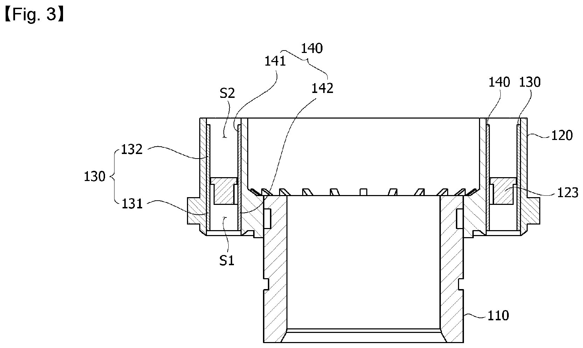

FIG. 3 is a cross-sectional view illustrating the stator of the sensing device according to the embodiment.

The stator 100 may be connected to an output shaft (not shown) of a steering shaft.

Referring to FIGS. 1 to 3, the stator 100 may include a stator holder 110, a stator body 120, a first stator tooth 130, and a second stator tooth 140.

The stator holder 110 may be connected to an output shaft of an electrical steering device. Accordingly, the stator holder 110 may rotate in conjunction with the rotation of the output shaft. The stator holder 110 may be formed in a cylindrical shape. The stator holder 110 may be formed of a metal material, but the present invention is not necessarily limited thereto. Of course, another material may be used for the stator holder 110 in consideration of a strength of a certain level or more such that the output shaft may be fixedly fitted thereinto.

The stator holder 110 may include a groove 111. The groove 111 is concavely formed in an outer circumferential surface of the stator holder 110. The groove 111 is formed along the outer circumferential surface of the stator holder 110. A separate fixing member may be inserted into the groove 111.

The stator holder 110 may be coupled to the stator body 120.

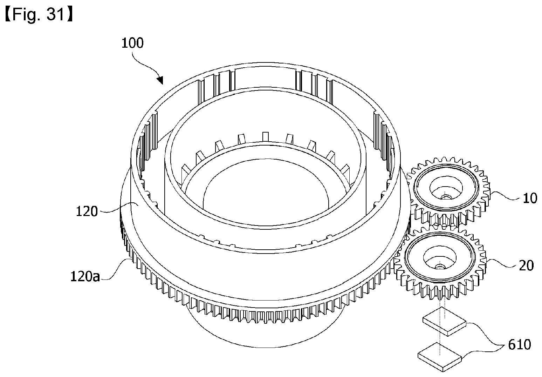

The stator body 120 may be disposed at one end portion of the stator holder 110. The stator body 120 may be coupled to the stator holder 110 through an insert injection molding method using a resin such as a synthetic resin. A main gear 121a may be formed on an outer circumferential surface of the stator body 120. The main gear 121a transfers a rotational force of the stator 100 to a first gear 10 (see FIG. 31) and a second gear 20 (see FIG. 31).

The first stator tooth 130 and the second stator tooth 140 may be disposed apart from each other in the radial direction. The first stator tooth 130 and the second stator tooth 140 may be fixed to the stator body 120. The first stator tooth 130 includes a first body 131, a first tooth 132, and a third tooth 133. The second stator tooth 140 includes a second body 141 and a second tooth 142.

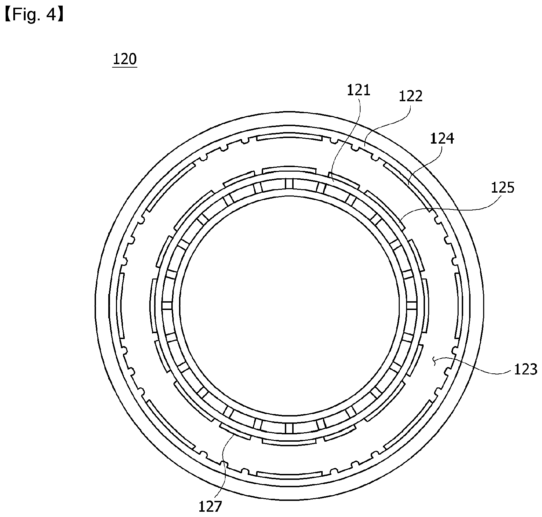

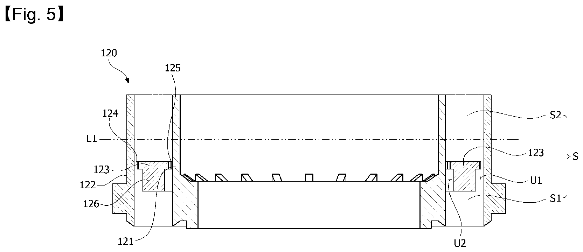

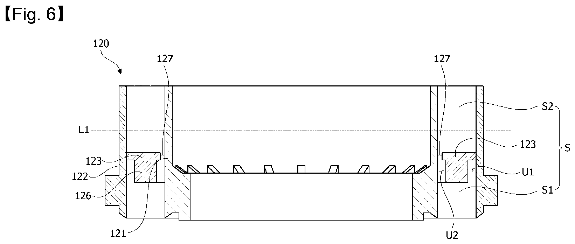

FIG. 4 is a plan view illustrating the stator body of the stator, and FIGS. 5 and 6 are cross-sectional views illustrating the stator body of the stator.

Referring to FIGS. 4 to 6, the stator body 120 includes an inner portion 121, an outer portion 122, and a diaphragm 123. The inner portion 121 and the outer portion 122 have a cylindrical shape. The outer portion 122 is disposed outside the inner portion 121 to be spaced apart from the inner portion 121 in the radial direction. The diaphragm 123 connects the inner portion 121 and the outer portion 122. The inner portion 121, the outer portion 122, and the diaphragm 123 may be integrated. The stator holder 110 may be coupled to an inner side of the inner portion 121. A space S may be formed between the outer portion 122 and the inner portion 121. The diaphragm 123 may be formed in a plate shape. The diaphragm 123 may be disposed between the inner portion 121 and the outer portion 122.

The space S may be divided into a first space S1 and a second space S2 by the diaphragm 123. The sensor 500 may be disposed in the first space S1, and a magnet 230 may be disposed in the second space S2. The diaphragm 123 may be disposed below a virtual horizontal line L1. Here, the virtual horizontal line L1 passes through a center of the outer portion 122 with respect to the axial direction.

Meanwhile, the diaphragm 123 may include first holes 124 and second holes 125. The first hole 124 and the second hole 125 are for arranging the first stator tooth 130 and the second stator tooth 140.

The first body 131 and the second body 141 may be disposed in the first space S1. The first tooth 132 and the second tooth 142 may be disposed in the second space S2.

The plurality of first holes 124 may be formed apart from each other in a circumferential direction. The first tooth 132 passes through the first hole 124 to be disposed in the second space S2. In this case, the number of the first holes 124 is the same as the number of the first teeth 132. The first hole 124 may be disposed adjacent to an inner circumferential surface of the outer portion 122. As shown in FIG. 5, the first hole 124 may be formed in the diaphragm 123 to be in contact with the inner circumferential surface of the outer portion 122.

The plurality of second holes 125 may be formed apart from each other in the circumferential direction. In this case, the second hole 125 may be disposed inside the first hole 124 to be spaced apart from the first hole 124 in the radial direction. The second tooth 142 passes through the second hole 125 to be disposed in the second space S2. In this case, the number of the second holes 125 is the same as the number of the second teeth 142 of the second stator tooth 140. The second hole 125 may be disposed adjacent to an outer circumferential surface of the inner portion 121. The second hole 125 may be formed in the diaphragm 123 to be in contact with the outer circumferential surface of the inner portion 121.

A plurality of third holes 127 may be formed apart from each other in the circumferential direction. The third hole 127 may be disposed between the second holes 125 in the circumferential direction. The third tooth 133 passes through the third hole 127 to be disposed in the second space S2. In this case, the number of the third holes 127 may be the same as the number of the third teeth 133 of the first stator tooth 130. The third hole 127 may be disposed adjacent to the outer circumferential surface of the inner portion 121. The third hole 127 may be formed in the diaphragm 123 to be in contact with the outer circumferential surface of the inner portion 121.

The first stator tooth 130 and the second stator tooth 140 may be disposed between the outer circumferential surface of the inner portion 121 of the stator body 120 and the inner circumferential surface of the outer portion 122 thereof. Here, the first stator tooth 130 and the second stator tooth 140 may be formed of a metal material for charging through rotation of the magnet 230.

The first stator tooth 130 may be fixed to the inner circumferential surface of the outer portion 122 through an adhesive member (not shown) such as glue, and the second stator tooth 140 may be fixed to the outer circumferential surface of the inner portion 121 through an adhesive member (not shown) such as glue, but the present invention is not necessarily limited thereto. For example, each of the first stator tooth 130 and the second stator tooth 140 may be fixed to the stator body 120 through a coupling member (not shown) or a calking method.

A boss 126 is disposed to extend downward from the diaphragm 123. A sidewall of the boss 126 and the outer portion 122 are spaced apart from each other to form a first slot U1. The first tooth 132 is inserted into the first slot U1 and passes through the first hole 124 to be positioned in the second space S2. The sidewall of the boss 126 and the inner portion 121 are spaced apart from each other to form a second slot U2. The second tooth 142 and the third tooth 133 are inserted into the second slot U2 and respectively pass through the second hole 125 and the third hole 127 to be positioned in the second space S2.

The first slot U1 guides the first tooth 132 to the first hole 124 to facilitate coupling in a process in which the first stator tooth 130 is coupled to the stator body 120.

The second slot U2 respectively guides the second tooth 142 and the third tooth 133 to the second hole 125 and the third hole 127 to facilitate coupling in a process in which the second stator tooth 130 is coupled to the stator body 120.

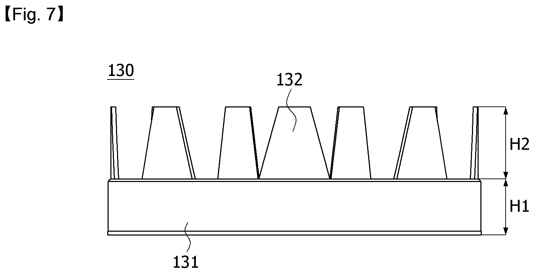

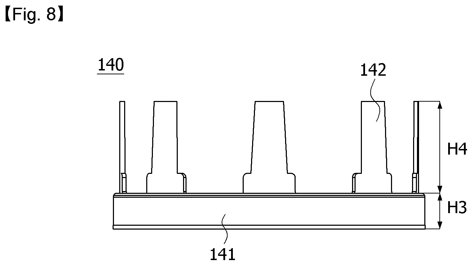

FIG. 7 is a side view illustrating the first stator tooth, and FIG. 8 is a side view illustrating the second stator tooth.

Referring to FIGS. 2 and 7, the first stator tooth 130 may include the first body 131 and the plurality of first teeth 132 which are spaced apart from each other and protrude from the first body 131 in the axial direction.

Referring to FIGS. 2 and 8, the second stator tooth 140 may include the second body 141 and the plurality of second teeth 142 which are spaced apart from each other and protrude from the second body 141 in the axial direction.

A height H1 of the first body 131 is smaller than a height H2 of the first tooth 132 with respect to an upper surface 131a of the first body 131. A height H3 of the second body 141 is smaller than a height H4 of the second tooth 142 with respect to an upper surface 141a of the second body 141. However, the present invention is not limited thereto, and the height H2 of the first tooth 132 may be different from the height H4 of the second tooth 142.

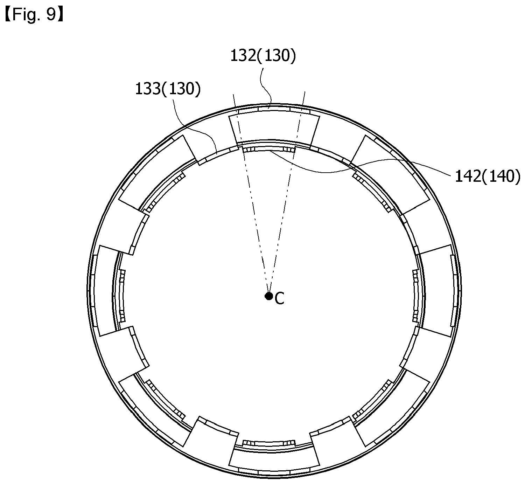

FIG. 9 is a plan view illustrating the first stator tooth, the second stator tooth, and the magnet.

Referring to FIG. 9, the first stator tooth 130 is disposed outside the second stator tooth 140. When viewed in the radial direction (y-direction), the first tooth 132 and the second tooth 142 may be disposed to overlap in the radial direction. Such an arrangement of the first tooth 132 and the second tooth 142 has an effect of reducing a leakage of a magnetic flux.

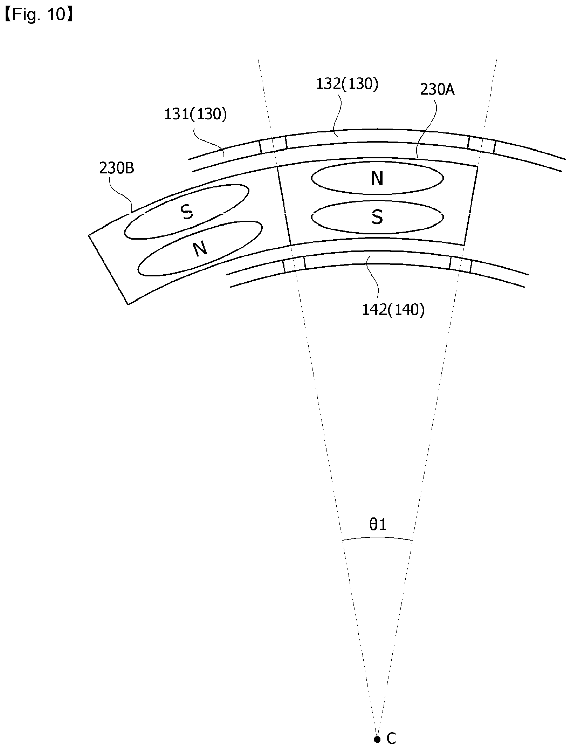

FIG. 10 is a view illustrating a first pole and a second pole of the magnet.

Referring to FIG. 10, the magnet includes a first pole 230A and a second pole 230B. The first pole 230A and the second pole 230B may be alternately disposed in a circumferential direction of the magnet.

The first pole 230A and the second pole 230B may each include an N-pole area NA and an S-pole area SA. The first pole 230A and the second pole 230B may each have a multi-layered structure in which the N-pole area NA and the S-pole area SA are separated as inner and outer portions.

In the first pole 230A, the N-pole area NA may be disposed at a relatively outer side, and the S-pole area SA may be disposed inside the N-pole area NA. In the second pole 230B, the N-pole area NA may be disposed at a relatively inner side, and the S-pole area SA may be disposed outside the N-pole area NA.

The N-pole area NA of the first pole 230A and the S-pole area SA of the second pole 230B are disposed adjacent to each other. The S-pole area SA of the first pole 230A and the N-pole area NA of the second pole 230B are disposed adjacent to each other.

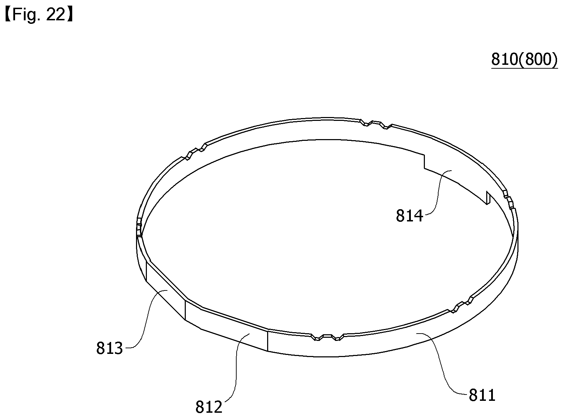

When the magnet 230 rotates and the first tooth 132 approaches the S-pole area SA to be charged into the S-pole, since the second tooth 142 approaches the N-pole area NA, the second tooth 142 is charged into the N-pole. Alternatively, when the magnet 230 rotates and the first tooth 132 approaches the N-pole area NA to be charged into the N-pole, since the second tooth 142 approaches the S-pole area SA, the second tooth 142 is charged into the S-pole. Accordingly, the sensor 500 may measure an angle through a magnetic field applied through the first stator tooth 130, the second stator tooth 140, and a collector 800 (see FIG. 22).

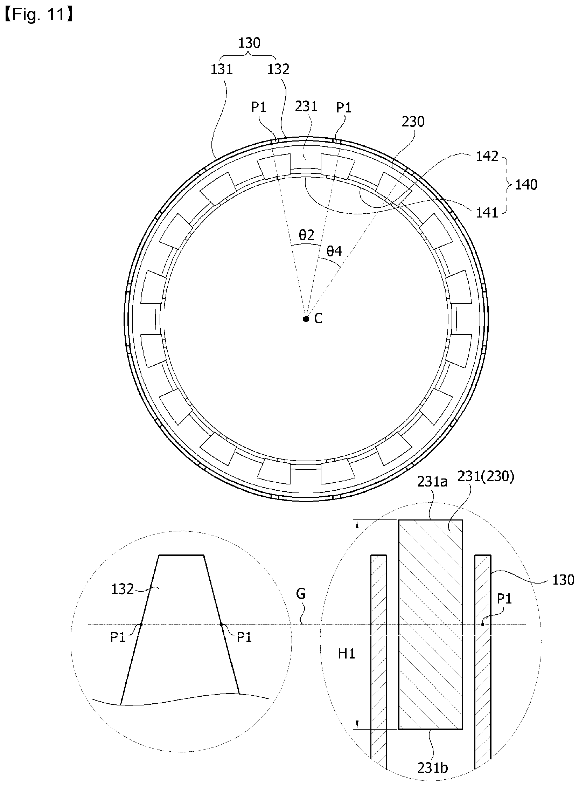

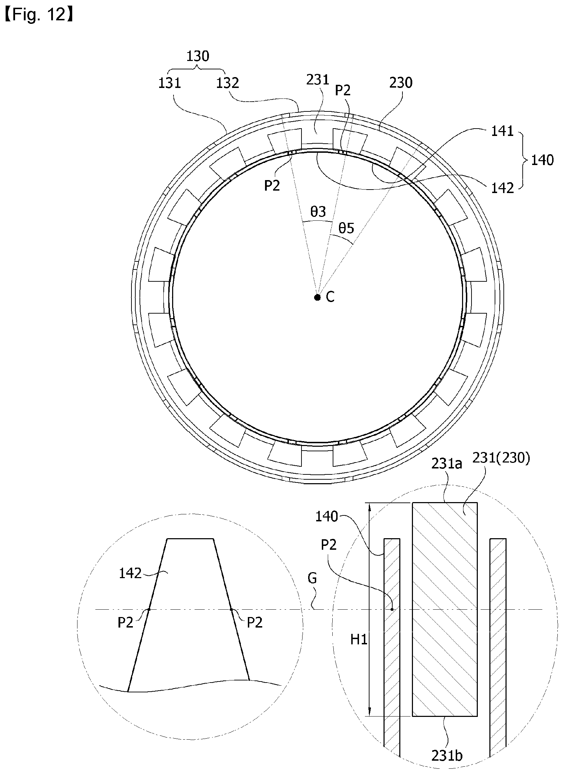

In the sensing device according to the embodiment, the first tooth 132 and the second tooth 142 overlap each other in the radial direction. Both ends of the second tooth 142 may overlap the first tooth 132. For example, in designing the positions and sizes of the first tooth 132 and the second tooth 142, a first angle θ1, a second angle θ2 (see FIG. 11), and a third angle θ3 (see FIG. 12) may be the same.

The first angle θ1 is an angle formed by both ends of the first pole 230A with respect to a stator center C. For example, when there are eight first poles 230A and eight second poles 230B, the first angle θ1 may be 22.5°.

FIG. 11 is a view illustrating the second angle θ2, and FIG. 12 is a view illustrating the third angle θ3.

Referring to FIG. 11, the second angle θ2 is an angle formed by both ends P1 of the first tooth 132 with respect to a stator center C. In the axial direction, a reference point G defining both ends P1 of the first tooth 132 is as follows. When the first tooth 132 is disposed to face a body 231 of the magnet 230, the reference point G corresponds to a point of the first tooth 132 corresponding to a midpoint of a height H1 of the body 231 of the magnet 230. The height H1 of the body 231 of the magnet 230 means a height formed between an upper surface 231a and a lower surface 231b of the magnet 230 in the axial direction. An angle θ4 between the first teeth 132 at the reference point G may be the same as the second angle θ2.

Referring to FIG. 12, the third angle θ3 is an angle formed by both ends P2 of the second tooth 142 with respect to a stator center C. In the axial direction, a reference point G defining both ends P2 of the second tooth 142 is as follows. When the second tooth 142 is disposed to face the body 231 of the magnet 230, the reference point G corresponds to a point of the second tooth 142 corresponding to a midpoint of the height H1 of the body 231 of the magnet 230. An angle θ5 between the second teeth 142 at the reference point G may be the same as the third angle θ3.

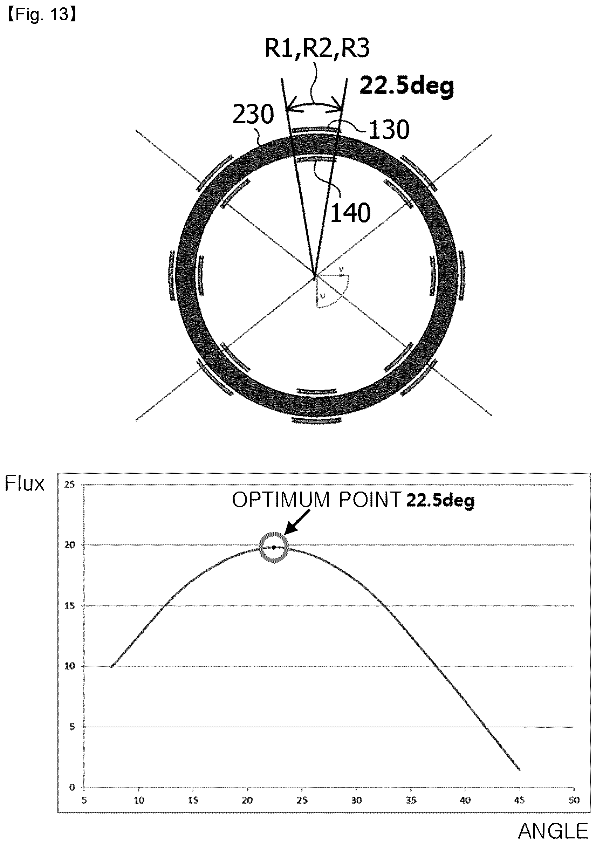

FIG. 13 is a graph showing a flux according to the first angle θ1, the second angle θ2, and the third angle θ3.

Referring to FIG. 13, in a state in which the second angle θ2 and the third angle θ3 are set to be the same, it can be confirmed that, as the second angle θ2 and the third angle θ3 are closer to the first angle θ1, a magnitude of the flux increases, and as the second angle θ2 and the third angle θ3 are farther from the first angle θ1, the magnitude of the flux decreases. When the sizes and positions of the first tooth 132 and the second tooth 142 are aligned such that the second angle θ2 and the third angle θ3 are the same as the first angle θ1, it can be seen that a magnitude of a flux of the first and second stator teeth 130 and 140 is the greatest.

Referring to FIG. 1, the rotor 200 may include a rotor holder 210, a rotor body 220, and the magnet 230. The rotor holder 210, the rotor body 220, and the magnet 230 may be integrated.

The rotor holder 210 may be connected to an input shaft of the electrical steering device. Accordingly, the rotor holder 210 may rotate in conjunction with the rotation of the input shaft. The rotor holder 210 may be formed in a cylindrical shape. An end portion of the rotor holder 210 may be coupled to the rotor body 220. The rotor holder 210 may be formed of a metal material, but the present invention is not necessarily limited thereto. Of course, another material may be used for the rotor holder 210 in consideration of a strength of a certain level or more such that the input shaft may be fixedly fitted thereinto.

The rotor body 220 is disposed at one side of an outer circumferential surface of the rotor holder 210. The rotor body 220 may be an annular member.

The magnet 230 is coupled to the rotor body 220. The magnet 230 rotates in conjunction with the rotor holder 210 when the rotor holder 210 rotates.

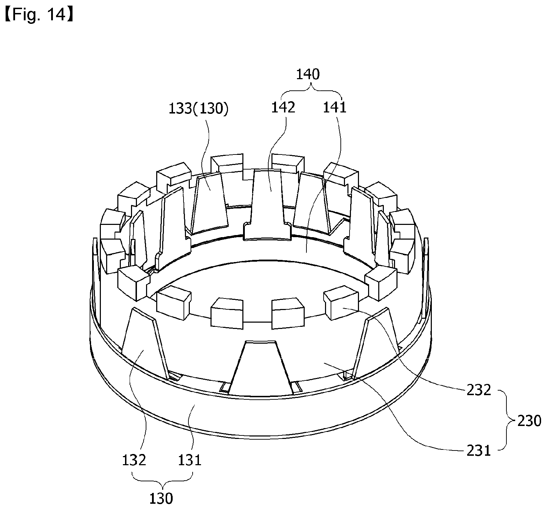

FIG. 14 is a perspective view illustrating an arrangement of the magnet with respect to the first stator tooth and the second stator tooth.

Referring to FIG. 14, the magnet 230 is disposed between the first tooth 132 and the second tooth 142. The magnet 230 is disposed between the third tooth 133 and the first tooth 132.

The body 231 of the magnet 230 is disposed to face the first tooth 132, the second tooth 142, and the third tooth 133. Protrusions 232 of the magnet 230 are disposed above the first tooth 132, the second tooth 142, and the third tooth 133.

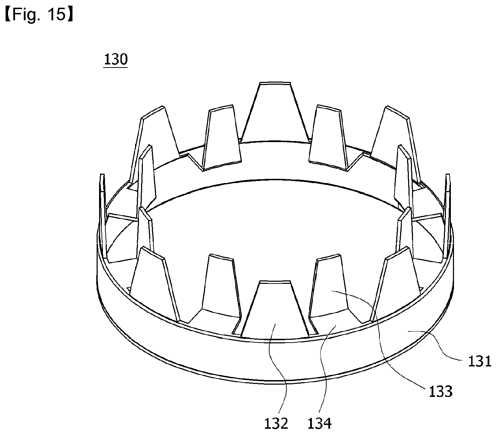

FIG. 15 is a perspective view illustrating the first stator tooth.

Referring to FIG. 15, the first stator tooth 130 may include the first body 131, the first teeth 132, the third teeth 133, and extension portions 134. The first body 131 may be a ring-shaped member. The first teeth 132 may be disposed apart from each other in the circumferential direction and may extend upward from an upper portion of the first body 131. The first body 131 and the plurality of first teeth 132 may be integrally formed. The extension portion 134 protrudes inward from the first body 131. The third tooth 133 is connected to the extension portion 134.

The first tooth 132 and the third tooth 133 may be formed in a shape having a wide lower portion and a narrow upper portion. For example, when viewed in the radial direction, a width of a lower portion of each of the first tooth 132 and the third tooth 133 may be greater than a width of an upper portion thereof. Each of the first tooth 132 and the third tooth 133 may be formed in a trapezoidal shape. Since the first tooth 132 passes through the first hole 124 and the third tooth 133 passes through the third hole 127, an upper surface of the first body 131 and an upper surface of the extension portion 134 may be in contact with a lower surface of the diaphragm 123.

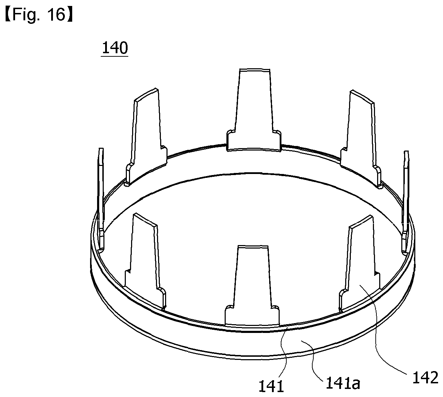

FIG. 16 is a perspective view illustrating the second stator tooth.

Referring to FIG. 16, the second stator tooth 140 may include the second body 141 and the second teeth 142. The second teeth 142 may be disposed apart from each other in the circumferential direction and may extend upward from an upper portion of the second tooth 142. The second body 141 and the plurality of second teeth 142 may be integrally formed. The second tooth 142 may be formed in a shape having a wide lower portion and a narrow upper portion. For example, when viewed in the radial direction, a width of a lower portion of the second tooth 142 may be greater than a width of an upper portion thereof. The second tooth 142 may be formed in a trapezoidal shape.

The second body 141 may include a protrusion 141a. The protrusion 141a may be an annular member that is bent outward and protrudes further than the second tooth 142. The protrusion 141a reduces an air gap between the sensor 500 and the second body 141 to increase an amount of flux applied to the sensor 500.

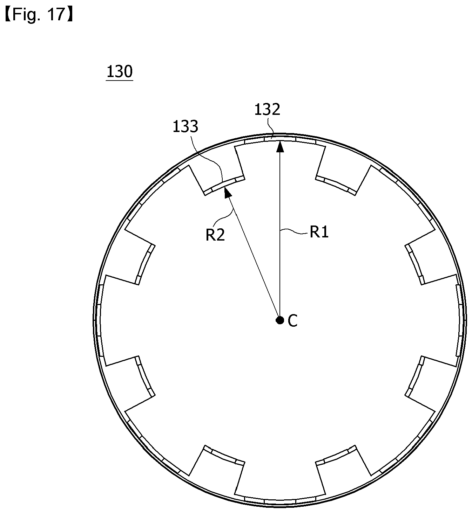

FIG. 17 is a plan view of the first stator tooth.

Referring to FIG. 17, the shortest distance R1 from a center C of the first stator tooth 130 to the first tooth 132 is greater than the shortest distance R2 from the center C of the first stator tooth 130 to the third tooth 133. The third tooth 133 is disposed relatively closer to the center C of the first stator tooth 130 than the first tooth 132. This is to guide an external magnetic field introduced from the inside of the stator holder 110 to the third tooth 133.

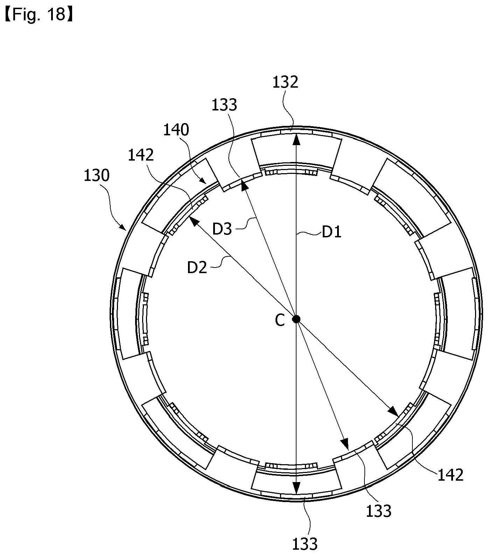

FIG. 18 is a plan view of the first stator tooth and the second stator tooth.

Referring to FIG. 18, a diameter D3 formed by the plurality of third teeth 133 is smaller than a diameter D1 formed by the plurality of first teeth 132, and a diameter D2 formed by the plurality of second teeth 142 is smaller than the diameter D1 formed by the plurality of first teeth 132. With respect to the magnet 230, the first tooth 132 is disposed outside the magnet 230, and the second tooth 142 and the third tooth 133 are disposed inside the magnet 230.

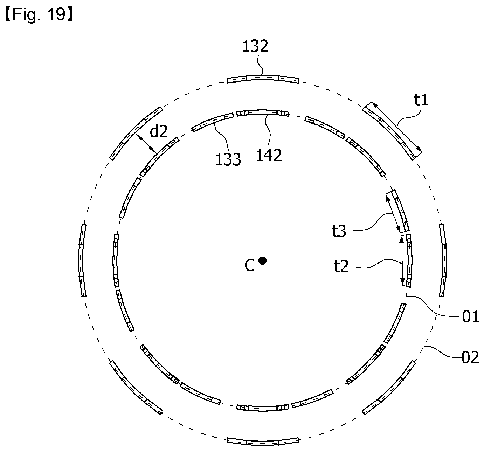

FIG. 19 is a view illustrating the first tooth, the second tooth, and the third tooth disposed on concentric circles.

Referring to FIG. 19, the first tooth 132, the second tooth 142, and the third tooth 133 may be disposed on the concentric circles. The second tooth 142 and the third tooth 133 may be disposed on a first virtual circumference O1, and the first tooth 132 may be disposed on a second virtual circumference O2 different from the first virtual circumference O1. The second tooth 142 and the third tooth 133 may be alternately disposed in a circumferential direction of the stator 100. The first virtual circumference O1 is disposed inside the second virtual circumference O2. This is to disperse an external magnetic field introduced from the inside of the stator holder 110 in all directions through the second teeth 142 and the third teeth 133.

Meanwhile, a circumferential width t3 of a lower end of the third tooth 133 may be smaller than a circumferential width t1 of a lower end of the first tooth 132. In addition, the circumferential width t3 of the lower end of the third tooth 133 may be smaller than a circumferential width t2 of a lower end of the second tooth 142.

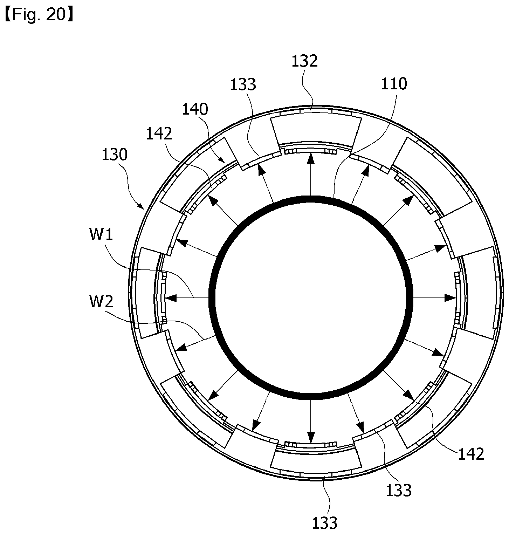

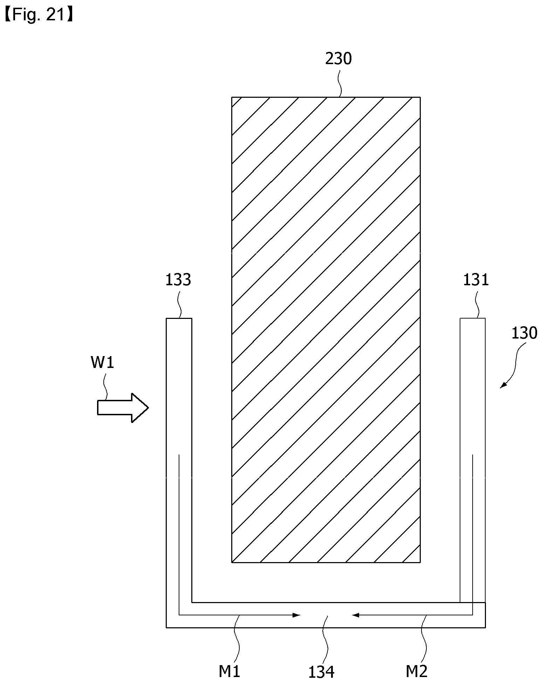

FIG. 20 is a plan view of the first stator tooth and the second stator tooth which illustrates a flow of an external magnetic field introduced from the inside of the stator holder, and FIG. 21 is a cross-sectional view of the first stator tooth which illustrates a flow of an external magnetic field guided to the third tooth.

Referring to FIG. 20, external magnetic fields W1 and W2 introduced along the stator holder 110 flow toward the first stator tooth 130 and the second stator tooth 140 in a radial direction of the stator 100. The external magnetic fields W1 and W2 are dispersed and guided to the third tooth 133 as well as the second tooth 142.

Referring to FIG. 21, an external magnetic field M1 introduced into the third tooth 133 is guided to the extension portion 134. In this case, the external magnetic field M1 introduced into the third tooth 133 may be canceled by an external magnetic field M2 that is introduced from the magnet 230 into the first tooth 132 and is guided to the extension portion 134. As described above, since an external magnetic field introduced along the stator holder 110 is guided to the first stator tooth 130 and canceled, there is an advantage in that an influence of the external magnetic field on the sensor 500 can be significantly reduced.

<Table 1> below shows a comparison between torque of Comparative Example and torque of Example.

**[Table 1]**

| | Torque (Nm) of Comparative Example 1 | Torque (Nm) of Example |
|---|---|---|
| Radial external magnetic field: 1,000 A/m | 0.41 Nm | 0.05 Nm |

Comparative Example 1 relates to a sensing device not including a structure such as the third tooth 133. Example relates to a sensing device including the third tooth 133. When there is no external magnetic field in the radial direction, a torque of zero Nm is normal. When an external magnetic field of 1,000 A/m is applied in the radial direction in Comparative Example 1 and Example, in the case of Comparative Example, a torque of 0.41 Nm is measured, and thus it can be seen that the sensing device is significantly affected by the external magnetic field. However, in the case of Example, a torque of 0.05 Nm is measured, and thus it can be seen that the sensing device is barely affected by the external magnetic field.

However, in the radial direction, a gap between the first and second stator teeth 130 and 140 and the sensor 500 determines an amount of flux. When the gap between the first and second stator teeth 130 and 140 and the sensor 500 decreases, a flux passing through the sensor 500 increases so that the sensitivity of a measured magnetic flux increases. On the other hand, when the gap between the first and second stator teeth 130 and 140 and the sensor 500 increases, a flux passing through the sensor 500 increases so that the sensitivity of a measured magnetic flux decreases. Therefore, a wobble value may significantly increase according to a deviation in the gap between the first and second stator teeth 130 and 140 and the sensor 500.

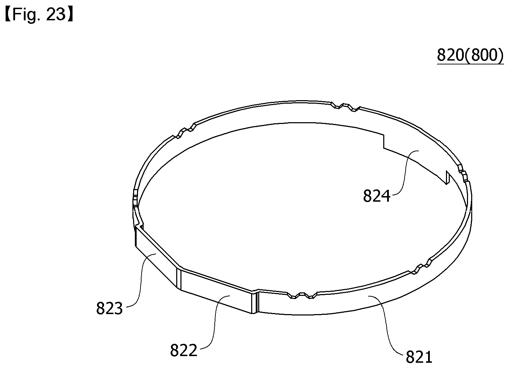

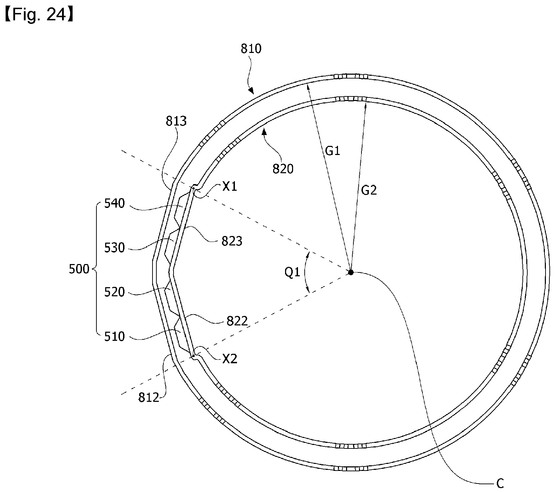

FIG. 22 is a perspective view illustrating a first collector, FIG. 23 is a perspective view illustrating a second collector, and FIG. 24 is a plan view of the first collector, the second collector, and the sensor.

Referring to FIGS. 22 to 24, the collector 800 may include a first collector 810 and a second collector 820. Each of the first collector 810 and the second collector 820 collects a flux of the stator 100. The first collector 810 and the second collector 820 may be formed of a metal material. The first collector 810 and the second collector 820 are disposed apart from each other in the radial direction from the same center as a stator center C. A radius G1 of the first collector 810 may be greater than a radius G2 of the second collector 820. A length of the first collector 810 may be greater than a length of the second collector 820. Here, the lengths may correspond to a circumferential length of the first collector 810 and a circumferential length of the second collector 820 when each of the first collector 810 and the second collector 820 is a ring-shaped member.

In the radial direction from the stator center C, the second collector 820 may be disposed inside the first collector 810. Each of the first collector 810 and the second collector 820 may be the ring-shaped member. Since each of the first collector 810 and the second collector 820 is the ring-shaped member, the collector 800 may cover an entire area of the first and second stator teeth 130 and 140 in a circumferential direction. As a result, when the entire area of the first and second stator teeth 130 and 140 is considered, the sensitivity of a measured magnetic flux according to a deviation in the gap between the first and second stator teeth 130 and 140 and the sensor 500 is complementarily stabilized, and thus there is an advantage in that a wobble value is decreased.

The first collector 810 may include first areas 812 and 813 and a second area 811. The first areas 812 and 813 are areas including flat surfaces, and the second area 811 is an area including a curved surface. The second collector 820 may include third areas 822 and 823 and a fourth area 821. The third areas 822 and 823 are areas including flat surfaces and the fourth area 821 is an area including a curved surface. The first areas 812 and 813 and the third areas 822 and 823 are disposed to correspond to each other. For example, the flat surfaces of the first areas 812 and 823 may be disposed within an angle Q1 between ends X1 and X2 of the flat surfaces of the third areas 822 and 823and a center C.

The first areas 812 and 813 and the third areas 822 and 823 may be disposed parallel to each other. The first areas 812 and 813 may include a first flat surface 812 and a second flat surface 813. The third area 822 and 823 may include a third flat surface 822 and a fourth flat surface 823.

The second area 811 and the fourth area 821 may include protrusions 814 and 824, respectively. The protrusions 814 and 824 are disposed to extend downward from a lower end of the second area 811 and a lower end of the fourth area 821, respectively. The protrusions 814 and 824 are for coupling the housing 700 and the collector 800.

The sensor 500 detects a change in magnetic field generated between the stator 100 and the rotor 200. The sensor 500 may be a Hall integrated circuit (IC). The sensor 500 detects an amount of magnetization of the stator 100 generated by an electrical interaction between the magnet 230 of the rotor 200 and the stator 100. The sensing device measures torque based on the detected amount of magnetization.

The sensor 500 may be disposed between the flat surfaces of the first areas 812 and 813 and the flat surfaces of the third area 822and 823.

The sensor 500 may include a first sensor 510, a second sensor 520, a third sensor 530, and a fourth sensor 540. The first sensor 510 and the second sensor 520 may be disposed between the first flat surface 812 and the third flat surface 822. The third sensor 530 and the fourth sensor 540 may be disposed between the second flat surface 813 and the fourth flat surface 823.

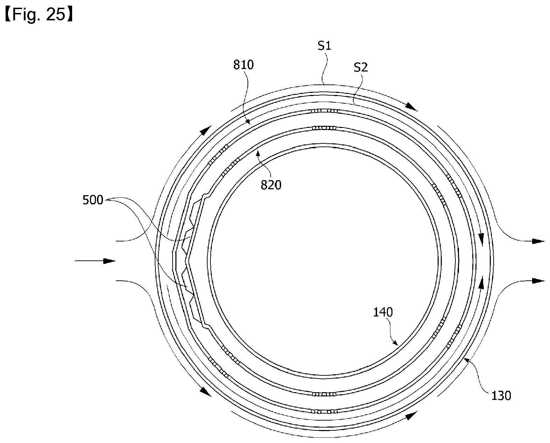

FIG. 25 is a view illustrating the stator teeth 130 and 140 and an external magnetic field avoidance state.

Referring to FIG. 25, the first collector 810 serves to block an external magnetic field introduced toward the sensor 500 together with the first stator tooth 130.

An external magnetic field significantly affects the sensing device in a y'-axis direction. Here, the y'-axis direction is a direction toward the sensor 500 in the radial direction perpendicular to the axial direction. Since an external magnetic field in the y'-axis direction is guided along the first stator tooth 130 and the second stator tooth 140 as denoted by S1 of FIG. 25, the external magnetic field in the y'-axis direction flows without affecting the sensor 500. Therefore, the sensing device according to the embodiment has an advantage in that an influence of an external magnetic field on the sensor 500 is small even in the y'-axis direction.

In addition, since an external magnetic field passing through the first stator tooth 130 to flow to the sensor 500 may be guided by the first collector 810 as denoted by S2 of FIG. 25, the external magnetic field flows without affecting the sensor 500 disposed inside the first collector 810. Therefore, the sensing device according to the embodiment has an advantage in that an influence of an external magnetic field on the sensor 500 is small even in the y'-axis direction.

**[Table 2]**

| | Torque (Nm) of Comparative Example | Torque (Nm) of Example |
|---|---|---|
| Axial external magnetic field: 1,000 A/m | 0.14 Nm | 0.10 Nm |
| y'-axis external magnetic field: 1,000 A/m | 0.20 Nm | 0.08 Nm |

Comparative Example of Table 2 relates to a sensing device including the first stator tooth 130 and the second stator tooth 140 like Example and including a semicircular single collector unlike Example. Example relates to a sensing device including the first collector 810 and the second collector 820 which have a ring shape. When there is no external magnetic field in the radial direction, a torque of zero Nm is normal. When an external magnetic field of 1,000 A/m is applied in the axial direction and the y'-axis direction in Comparative Example and Example in Table 2, torques of 0.10 Nm and 0.08 Nm are measured, and thus it can be seen that the sensing device of Example is not affected by the external magnetic field unlike the sensing device of Comparative Example.

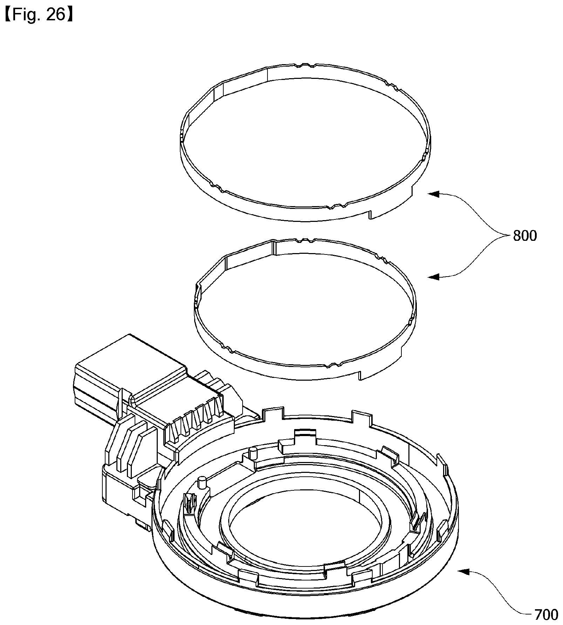

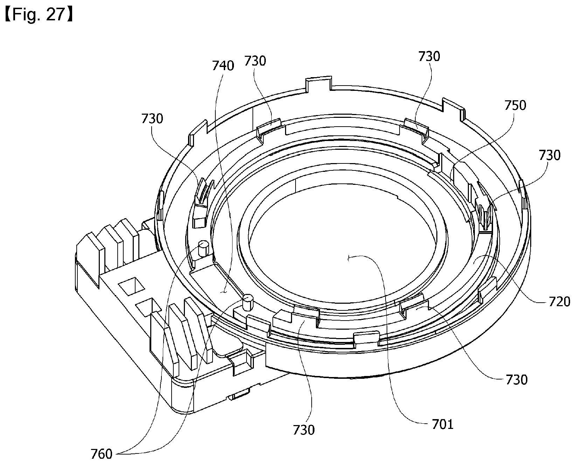

FIG. 26 is a view illustrating the housing 700 and the collector 800, and FIG. 27 is a view illustrating the housing 700.

Referring to FIGS. 26 and 27, the collector 800 is mounted in the housing 700.

The housing 700 may include a housing body 710, first protrusions 760, a second protrusion 720, and third protrusions 730. The housing body 710 may have a plate shape including an upper surface and a lower surface and may have a form of which upper and lower portions are open. A hole 701 is formed in a central portion of the housing body 710. The stator holder 110 is positioned inside the hole 701. The circuit board 600 may be mounted on a lower surface of the housing body 710. The sensor 500 is mounted on the circuit board 600. The sensor 500 may pass through the hole 701 of the housing 700 to be disposed on an upper surface of the housing 700. A separate cover may be coupled to a lower side of the housing body 710 to cover the circuit board 600. In addition, grooves 750 into which the protrusions 814 and 824 of the collector 800 are inserted may be formed n the housing 700.

The second protrusion 720 may protrude from the upper surface of the housing 700 in the axial direction. The second protrusion 720 may be disposed along a circumference of the hole 701. The second protrusion 720 may be an arc-shaped member. The second protrusion 720 may be disposed between the first collector 810 and the second collector 820 in the radial direction. An outer circumferential surface of the second protrusion 720 may be in contact with an inner circumferential surface of the first collector 810, and an inner circumferential surface of the second protrusion 720 may be in contact with an outer circumferential surface of the second collector 820.

The third protrusion 730 may be disposed to protrude from an upper surface of the second protrusion 720 in the axial direction. The third protrusion 730 may be disposed between the first collector 810 and the second collector 820 in the radial direction. The plurality of third protrusions 730 may be provided. The third protrusion 730 is fused to fix the collector 800 to the housing 700.

The first protrusion 760 is a member for maintaining a gap between the first collector 810 and the second collector 820. In particular, the first protrusion 760 is a member for maintaining the gap between the first collector 810 and the second collector 820 near the sensor 500. The first protrusion 760 protrudes from the second protrusion 720 in the axial direction. The first protrusion 760 may be disposed adjacent to the hole 740. The first protrusion 760 may be a cylindrical member.

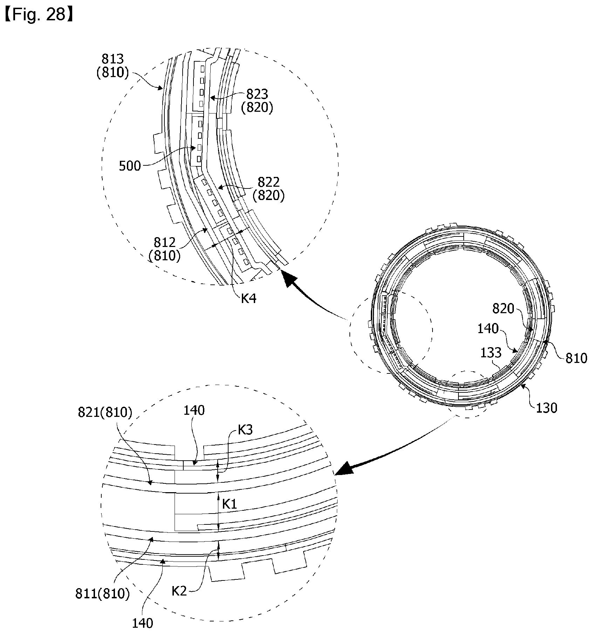

FIG. 28 is a view illustrating radial distances between the first stator tooth 130, the first collector 810, the second collector 820, and the second stator tooth 140.

Referring to FIG. 28, the sum of a radial distance k2 between the first stator tooth 130 and the second area 811 of the first collector 810 and a radial distance k3 between the second stator tooth 140 and the fourth area 821 of the second collector 820 may be shorter than a radial distance k4 between the first areas 812 and 813 of the first collector 810 and the third areas 822 and 823 of the second collector 820.

The radial distance k2 between the first stator tooth 130 and the second area 811 of the first collector 810 may be shorter than a radial distance k1 between the second area 811 of the first collector 810 and the fourth area 821 of the second collector 820. In addition, the radial distance k3 between the second stator tooth 140 and the fourth area 821 of the second collector 820 may be shorter than the radial distance k1 between the second area 811 of the first collector 810 and the fourth area 821 of the second collector 820.

In the radial direction, the first collector 810 and the second collector 820 may be disposed between the first tooth 132 and the third tooth 133.

For example, the radial distance k1 between the second area 811 of the first collector 810 and the fourth area 821 of the second collector 820 may be in a range of 10.4 mm to 10.8 mm. In addition, the radial distance k2 of the first stator tooth 130 and the second area 811 of the first collector 810 may be in a range of 0.7 mm to 1.0 mm, and the radial distance k3 between the second stator tooth 140 and the fourth area 821 of the second collector 820 may be in a range of 0.55 mm to 0.85 mm.

Meanwhile, the radial distance k4 between the first areas 812 and 813 of the first collector 810 and the third areas 822 and 823 of the second collector 820 may be in a range of 1.5 mm to 1.9 mm.

The above-described radial distances between the first stator tooth 130, the first collector 810, the second collector 820, and the second stator tooth 140 correspond to optimal distances for transmitting a magnetic field from the first stator tooth 130 or the second stator tooth 140 to the first collector 810 or the second collector 820 and detecting the transmitted magnetic field by the sensor 500.

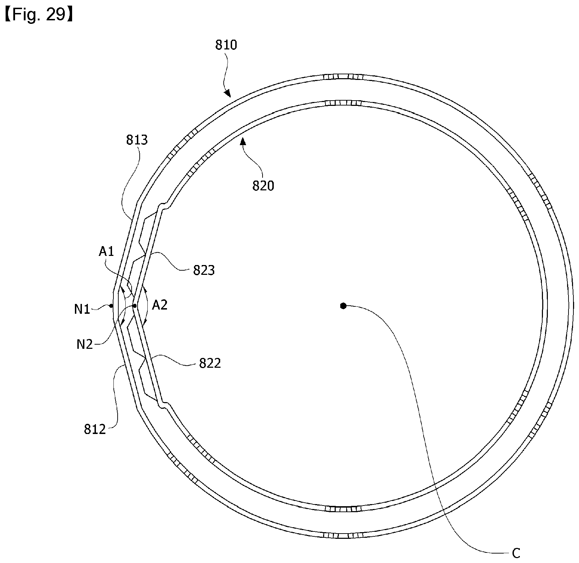

FIG. 29 is a plan view of the collector which illustrates an angle formed by the first flat surface 812 and the second flat surface 813 and an angle formed by the third flat surface 822 and the fourth flat surface 823.

Referring to FIG. 29, a fourth angle A1 formed by the first flat surface 812 and the second flat surface 813 of the first collector 810 with respect to a circumferential width center N1 of the first areas 812 and 813 may be the same as a fifth angle A2 formed by the third flat surface 822 and the fourth flat surface 823 of the second collector 820 with respect to a circumferential width center N2 of the second areas 822 and 823. In this case, the fourth angle A1 or the fifth angle A2 may be in a range of 140° to 160°.

In a state in which the radial distance k1 between the second area 811 of the first collector 810 and the fourth area 821 of the second collector 820 is in a range of 10.4 mm to 10.8 mm, the radial distance k2 between the first stator tooth 130 and the second area 811 of the first collector 810 is in a range of 0.7 mm to 1.0 mm, and the radial distance k3 of the second stator tooth 140 and the fourth area 821 of the second collector 820 is in a range of 0.55 to 0.85 mm, when the fourth angle A1 or the fifth angle A2 is in a range of 140° to 160°, there is an advantage in that interference between the collector 800 and the first stator tooth 130 or between the collector 800 and the second stator tooth 140 does not occur.

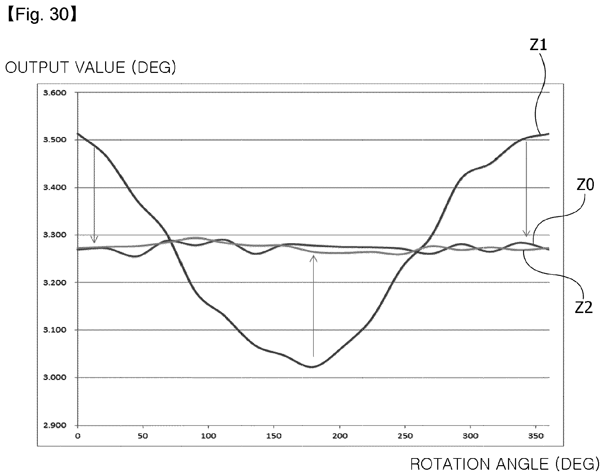

FIG. 30 is a graph showing a change in measured torque caused by an external magnetic field in response to a rotation angle.

Referring to FIG. 30, Z0 of FIG. 30 represents an output value of a sensing device in response to a rotation angle in a state in which a center of the collector 800 is aligned with a center of the sensing device. When a rotor rotates one revolution, the output value is constant around 3.3 degrees.

In a sensing device including a semicircular collector, Z1 of FIG. 30 represents an output value of the sensing device in response to a rotation angle when a rotor rotates one revolution in a state in which a center of the collector disposed at an outer side is offset by 0.2 mm. As a measurement result, the output value is significantly changed in response to the rotation angle, and thus a wobble value is increased by up to 0.33 degrees.

In the sensing device including the first collector 810 and the second collector 820 according to the embodiment, Z2 of FIG. 30 represents an output value of the sensing device in response to a rotation angle when the rotor 200 rotates one revolution in a state in which a center of the first collector 810 disposed at an outer side is offset by 0.2 mm from a center of the stator teeth 130 and 140. As a measurement result, the output value is constant similar to that of Z0 of FIG. 30, and thus it is confirmed that a wobble value is significantly improved unlike that of Z1 of FIG. 30 even when the center of the first collector 810 is offset.

FIG. 31 is a view illustrating the first gear and the second gear which are engaged with the main gear.

Referring to FIG. 31, sub-gears engaged with the main gear 120a include the first gear 10 and the second gear 20. The main gear 120a, the first gear 10, the second gear 20, and a sensor 610 are for measuring an angle of a steering shaft.

The main gear 120a, the first gear 10, and the second gear 20 rotate while engaged with each other. The main gear 120a is disposed on the outer circumferential surface of the stator body 120. The first gear 10 and the second gear 20 are rotatably disposed in the housing body 710. A gear ratio of each of the main gear 120a, the first gear 10, and the second gear 20 is predetermined. For example, in a case in which the total angle of the main gear 120a is 1620°, when the main gear 120a rotates 4.5 revolutions, the first gear 10 may be designed to rotate 15.6 revolutions, and the second gear 20 may be designed to rotate 14.625 revolutions. Here, the total angle is an angle calculated by accumulating revolutions of the main gear 120a when all gears return to a state immediately before rotation.

A magnet may be disposed on the first gear 1000 and the second gear 1100. The magnet is disposed to face the sensor 610.

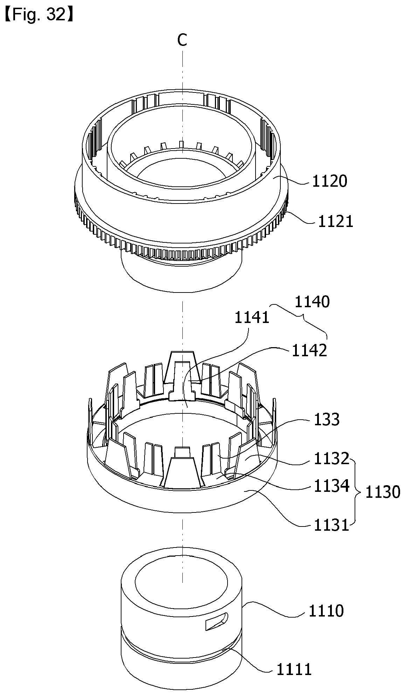

FIG. 32 is a view illustrating a stator of a sensing device according to a second embodiment.

Referring to FIG. 32, a stator of the sensing device according to the second embodiment may include a stator holder 1110, a stator body 1120, a first stator tooth 1130, and a second stator tooth 1140. Hereinafter, only components different from those of the sensing device according to the first embodiment will be described, and descriptions of the same components will be omitted.

The first stator tooth 1130 and the second stator tooth 1140 may be disposed apart from each other in a radial direction. The first stator tooth 1130 and the second stator tooth 1140 may be fixed to the stator body 1120. The first stator tooth 1130 includes a first body 1131, first teeth 1132, third teeth 1133, and extension portions 1134. The second stator tooth 1140 includes a second body 1141 and second teeth 1142.

The stator holder 1110 may be coupled to the stator body 1120.

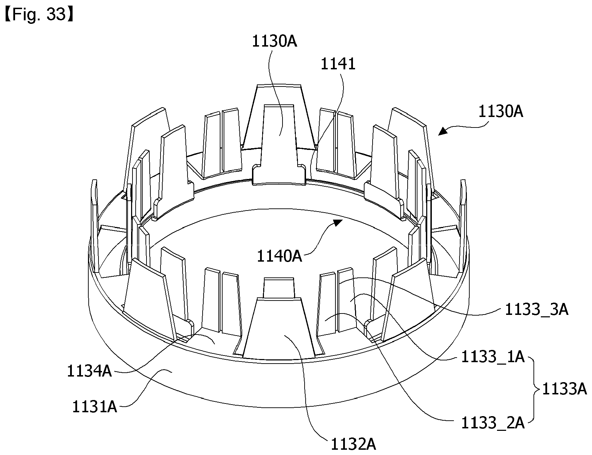

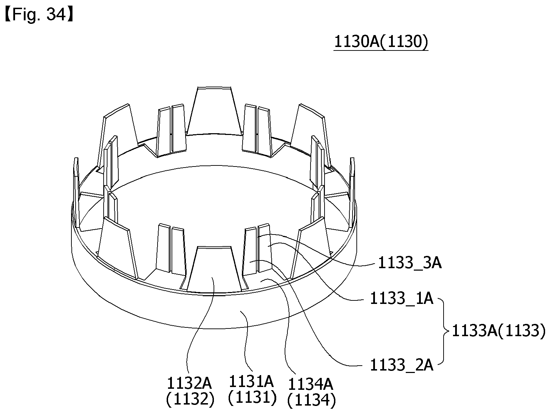

FIG. 33 is a view illustrating a first stator tooth and a second stator tooth according to a first modified example, and FIG. 34 is a view illustrating the first stator tooth shown in FIG. 33.

Referring to FIGS. 33 and 34, a first stator tooth 1130 may include a first body 1131, first teeth 1132, third teeth 1133, and extension portions 1134. The first body 1131 may be a ring-shaped member. The first teeth 1132 may be disposed apart from each other in a circumferential direction and may extend upward from an upper portion of the first body 1131. The first body 1131 and the plurality of first teeth 1132 may be integrally formed. The first extension portion 1134 protrudes inward from the first body 1131. The third tooth 1133 is connected to the first extension portion 1134.

The first tooth 1132 and the third tooth 1133 may be formed in a shape having a wide lower portion and a narrow upper portion. For example, when viewed in a radial direction, a width of a lower portion of each of the first tooth 1132 and the third tooth 1133 may be greater than a width of an upper portion thereof. Each of the first tooth 1132 and the third tooth 1133 may be formed in a trapezoidal shape. Since the first tooth 1132 passes through a first hole 1124 and the third tooth 1133 passes through a third hole 1127, an upper surface of the first body 1131 and an upper surface of the extension portion 1134 may be in contact with a lower surface of a diaphragm 1123.

The first extension portion 1134 may be disposed to overlap a magnet 1230 in an axial direction. The third tooth 1133 may be disposed to overlap the magnet 1230 in the radial direction.

A second stator tooth 1140 may include a second body 1141 and second teeth 1142. The second teeth 1142 may be disposed apart from each other in the circumferential direction and may extend upward from an upper portion of the second body 1141. The second body 1141 and the plurality of second teeth 1142 may be integrally formed. The second tooth 1142 may be formed in a shape having a wide lower portion and a narrow upper portion. For example, when viewed in the radial direction, a width of a lower portion of the second tooth 1142 may be greater than a width of an upper portion thereof. The second tooth 1142 may have a trapezoidal shape.

Meanwhile, a first stator tooth 1130A according to the first modified example may include a first body 1131A, first teeth 1132A, third teeth 1133A, and first extension portions 1134A. The third tooth 1133A may include a third-first tooth 1133_1A and a third-second tooth 1133_2A. The third-first tooth 1133_1A may protrude from any one area of the first extension portion 1134A. The third-second tooth 1133 2A may protrude from another area of the first extension portion 1134A. In this case, the third-first tooth 1133_1A and the third-second tooth 1133_2A may be disposed apart from each other to form a groove 1133_3A. The groove 1133_3A may be formed to be concave from an end surface of the third tooth 1133A. Alternatively, the third-first tooth 1133_1A and the third-second tooth 1133_2A may be spaced apart from each other to form a hole 1133_3A. The hole 1133_3A may be formed to pass through inner and outer surfaces of the tooth. Although the groove 1133_3A and the hole 1133_3A have been separately described, the groove 1133_3A and the hole 1133_3A shown in the drawing may be the same. The third-first tooth 1133_1A and the third-second tooth 1133_2A may have the same shape. Each of the third-first tooth 1133_1A and the third-second tooth 1133 2A may have a shape having a wide lower portion and a narrow upper portion. For example, each of the third-first tooth 1133_1A and the third-second tooth 1133_2A may have a trapezoidal shape of which a width gradually increases toward the first extension portion 1134A.

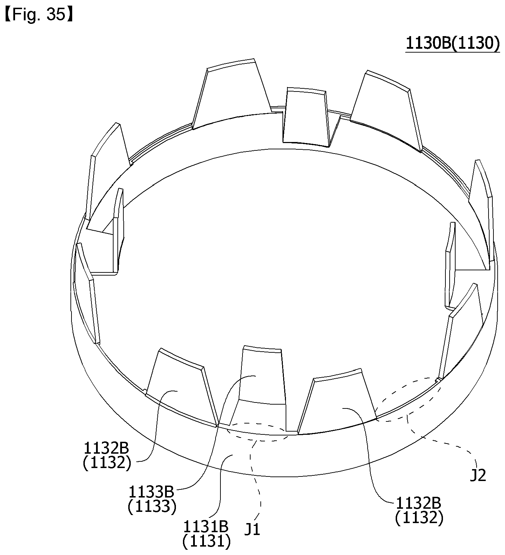

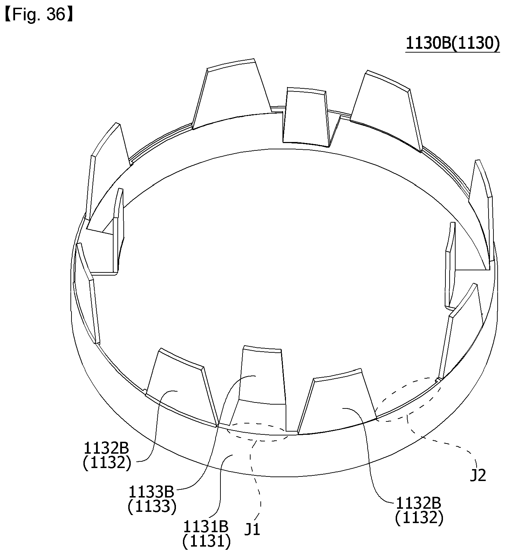

FIG. 35 is a view illustrating a first stator tooth and a second stator tooth according to a second modified example, and FIG. 36 is a view illustrating the first stator tooth shown in FIG. 35.

Referring to FIGS. 35 and 36, a first stator tooth 1130B according to the second modified example may include a first body 1131B, first teeth 1132B, third teeth 1133B, and extension portions 1134B. In the first stator tooth 1130B, a first area J1 and a second area J2 may be alternately disposed in a circumferential direction. The first area J1 is an area in which the first extension portion 1134B is disposed between the first teeth 1132B in the circumferential direction. The second area J2 is an area in which the first extension portion 1134B is not disposed between the first teeth 1132B in the circumferential direction. The first stator tooth 1130B includes the third tooth 1133B, and the third tooth 1133B protrudes from the first extension portion 1134B. The third tooth 1133B may be disposed to overlap a magnet 1230 in a radial direction.

Since the number of the first extension portions 1134B and the third teeth 1133B of the first stator tooth 1130B according to the second modified example is less than the number of the first extension portions 1134A and the third teeth 1133A of the first stator tooth 1130A according to the first modified example, there are advantages in that it is possible to reduce an amount of a material for manufacturing a stator tooth and improve the assemblability of a stator body 120.

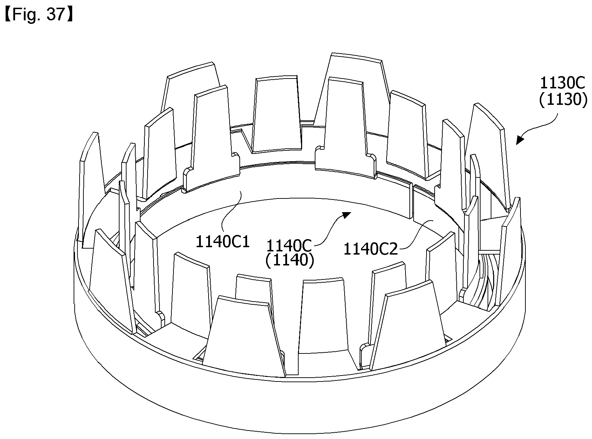

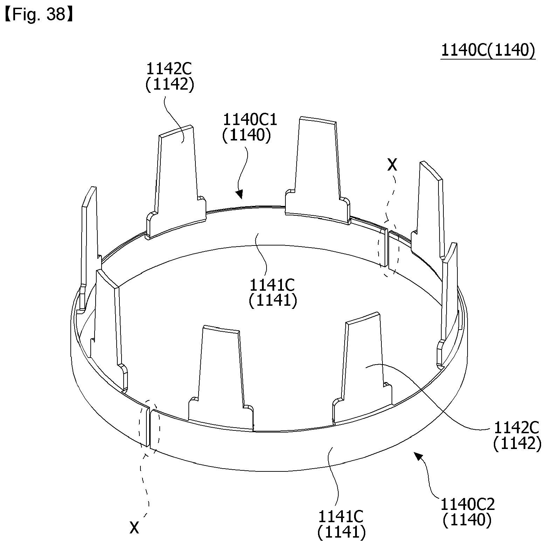

FIG. 37 is a view illustrating a first stator tooth and a second stator tooth according to a third modified example, and FIG. 38 is a view illustrating the second stator tooth shown in FIG. 37.

Referring to FIGS. 37 and 38, a second stator tooth 1140C according to the third modified example may be formed by combining a plurality of stator teeth. For example, the second stator tooth 1140C may include a second-first stator tooth 1140C1 including some of a plurality of second teeth 1142C and a second-second stator tooth 1140C2 including the rest of the plurality of second teeth 1142C. The second-first stator tooth 1140C1 and the second-second stator tooth 1140C2 may be disposed apart from each other. Since the second stator tooth 1140C according to the third modified example has a relatively simple shape, there are advantages in that it is easy to manufacture the second stator tooth 1140C and it is possible to reduce an amount of a material for manufacturing a stator tooth by reducing the generation of scrap and improve the assemblability of a stator body 1120.

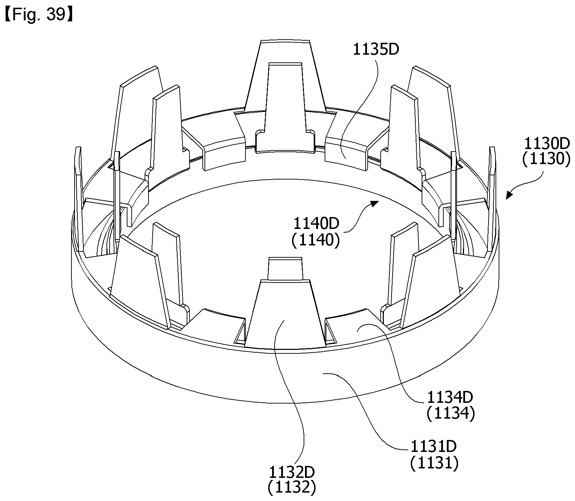

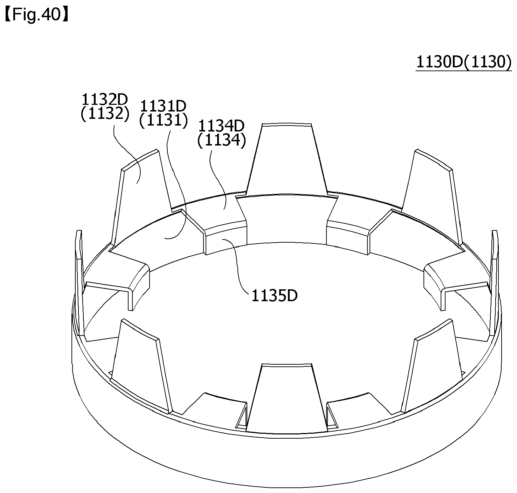

FIG. 39 is a view illustrating a first stator tooth and a second stator tooth according to a fourth modified example, and FIG. 40 is a view illustrating the first stator tooth shown in FIG. 39.

Referring to FIGS. 39 and 40, a first stator tooth 1130D may include a first body 1131D, first teeth 1132D, second teeth 1133D, and first extension portions 1134D. In addition, the first stator tooth 1130D may include a second extension portion 1135 extending from the first extension portion 1134D. The second extension portion 1135 may be bent from the first extension portion 1134D and may be disposed to overlap the first body 1131D in a radial direction. That is, the second extension portion 1135 is disposed to not face a magnet 1230 in the radial direction. In the first stator tooth 1130D according to the third modified example, since the total area of a stator tooth is small, there are advantages in that it is possible to reduce an amount of a material for manufacturing the stator tooth and significantly reduce interference with the magnet 1230. In addition, there is an advantage in that the assemblability of a stator body 120 is improved.

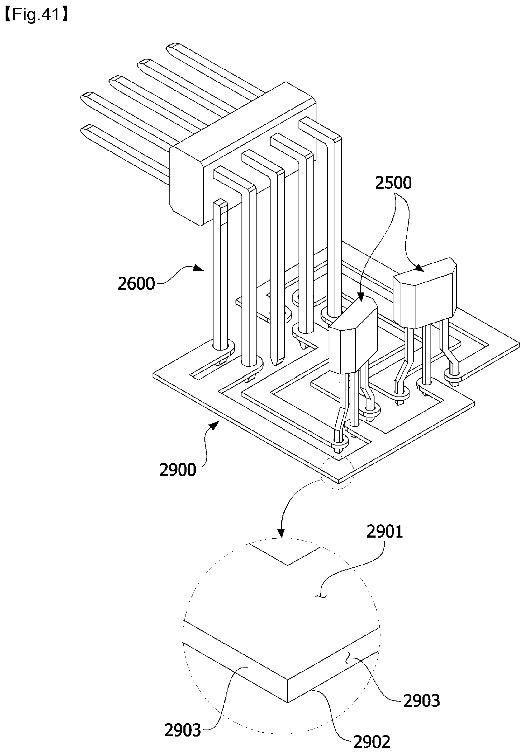

FIG. 41 is a perspective view illustrating a sensor 2500, a connector pin 2600, and a plate 2900.

Referring to FIG. 41, the sensor 2500 is welded and connected to the plate 2900. The connector pin 2600 is welded and connected to the plate 2900. The plate 2900 may be made of a conductive material such as copper. The plate 2900 may be provided as a plurality of plates 2900. The plurality of plates 2900 may be disposed to be coplanar with each other. The plurality of plates 2900 may be disposed apart from each other. The sensor 2500 is coupled to plate 2900 in an upright form. The connector pin 2600 is also coupled to the plate 2900 in an upright form.

The plate 2900 may include a first surface 2901, a second surface 2902, and a third surface 2903. The first surface 2901 and the second surface 2902 are disposed to face each other. The third surface 2903 is a surface connecting the first surface 2901 and the second surface 2902. When the plate 2900 is a plate-shaped member, the first surface 2901 corresponds to one surface of the plate 2900, the second surface 2902 corresponds to the other surface of the plate 2900, and the third surface 2903 corresponds to a side surface of the plate 2900.

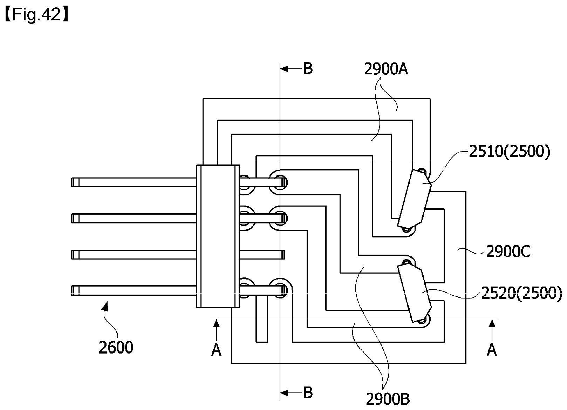

FIG. 42 is a top-down view of the sensor 2500, the connector pin 2600, and the plate 2900 shown in FIG. 41.

Referring to FIGS. 41 to 42, the sensor 2500 may include a first sensor 2510 and a second sensor 2520. The plate 2900 may include a first plate 2900A and a second plate 2900B. The first plate 2900A electrically connects the first sensor 2510 and the connector pin 2600. The second plate 2900B electrically connects the second sensor 2520 and the connector pin 2600. A third plate 2900C connects the first sensor 2510 and the second sensor 2520. The third plate 2900C electrically connects the first sensor 2510 and the second sensor 2520 to the connector pin 2600.

The first surface 2901 of the first plate 2900A, the first surface 2901 of the second plate 2900B, and the first surface 2901 of the third plate 2900C may be disposed to be coplanar with each other. The second surface 2902 of the first plate 2900A, the second surface 2902 of the second plate 2900B, and the second surface 2902 of the third plate 2900C may be disposed to be coplanar with each other.

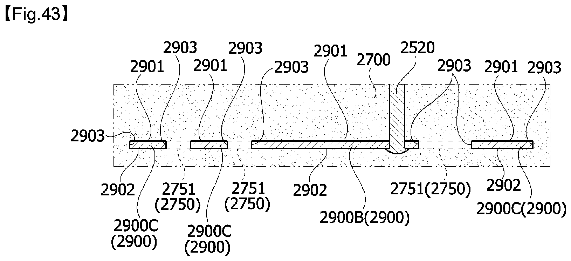

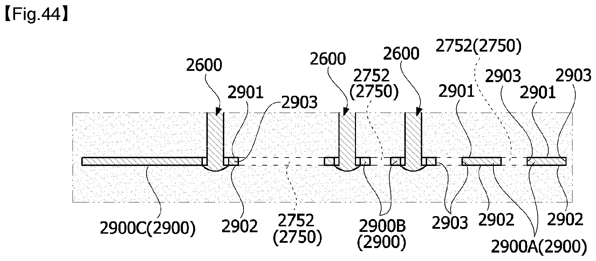

FIG. 43 is a side cross-sectional view of the plate 2900 along line A-A of FIG. 42, and FIG. 44 is a side cross-sectional view of the plate 2900 along line B-B of FIG. 42.

Referring to FIGS. 42 to 44, the first surface 2901 and the second surface 2902 of the plate 2900 are in contact with a housing 2700, and the third surface 2903 of the plate 2900 is also in contact with the housing 2700. The housing 2700 may include partition walls 2750 disposed between adjacent plates 2900. The partition walls 2750 maintain spaces between the adjacent plates 2900 and insulate the adjacent plates 2900 from each other.

The partition wall 2750 may include a first partition wall 2751 and a second partition wall 2752. The first partition wall 2751 may be disposed in a first direction. The second partition wall 2752 may be bent from the first partition wall 2751 in a second direction different from the first direction. For example, the second partition wall 2752 may be vertically connected to the first partition wall 2751.

Such a structure of the plate 2900 and the housing 2700 may be implemented by integrally injection-molding the sensor 2500, the connector pin 2600, and the plate 2900 with the housing 2700 in a state in which the sensor 2500, the connector pin 2600, and the plate 2900 are coupled.

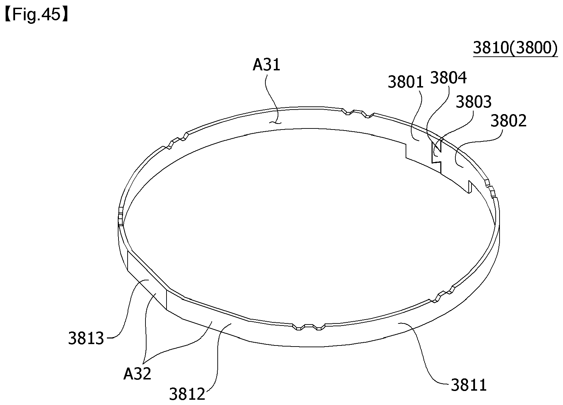

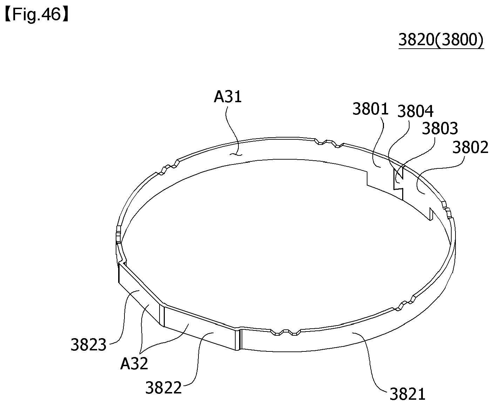

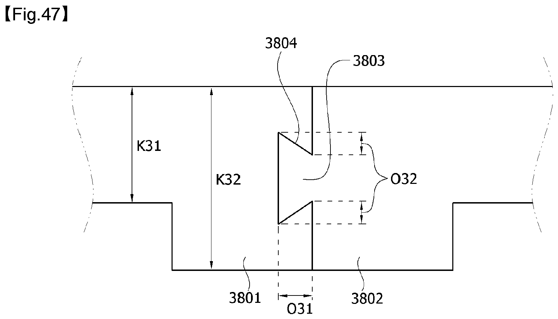

FIG. 45 is a perspective view of a first collector, FIG. 46 is a perspective view of a second collector, and FIG. 47 is an enlarged view illustrating one end portion and the other end portion of a collector.

A first collector 3810 and a second collector 3820 may include extension portions 3811 and 3821, first bodies 3812 and 3822, and second bodies 3813 and 3823, respectively. Each of the first bodies 3812 and 3822 and the second bodies 3813 and 3823 is disposed to face a first sensor 3500. The second bodies 3813 and 3823 may extend from the first bodies 3812 and 3822. The extension portions 3811 and 3821 may extend from the first bodies 3812 and 3822 and the second bodies 3813 and 3823, respectively.

Each of the first bodies 3812 and 3822 and the second bodies 3813 and 3823 may include a flat surface, and the extension portions 3811 and 3821 may include a curved surface.

A collector 3800 may be manufactured through a forming method rather than a drawing method. The collector 3800 manufactured through the forming method is formed so that one end portion 3801 and the other end portion 3802 are connected in contact with each other. Since the collector 3800 is manufactured through the forming method, the number of post processing operations can be significantly reduced, and an amount of a material of the collector 3800 can be significantly reduced. In addition, when the collector 3800 is manufactured through the forming method, unlike the drawing method, there is an advantage in that mass production is possible.

One end portion 3801 and the other end portion 3802 of the collector 3800 may be disposed to overlap each other in a first direction or a second direction. According to directionality in the first direction and the second direction, the collector 3800 may be implemented as any of various modified examples. Hereinafter, one end portion 3801 and the other end portion 3802 of the collector 3800 are applied to both the first collector 3800 and the second collector 3800.

In a collector 3800 according to a modified example, a first direction may correspond to a width direction of the collector 3800, and a second direction may correspond to a circumferential direction of the collector 3800. One end portion 3801 and the other end portion 3802 of the collector 3800 may be disposed to form an overlap area 031 in the width direction of the collector 3800. In addition, one end portion 3801 and the other end portion 3802 of the collector 3800 may be disposed to form an overlap area O32 in the circumferential direction of the collector 3800.

For example, the collector 3800 may include a protrusion 3803 protruding from the other end portion 3802. The collector 3800 may include a groove 3804 which is formed to be concave from one end portion 3801 and in which the protrusion 3803 is disposed. The protrusion 3803 protrudes in the circumferential direction of the collector 3800 and is positioned in the groove 3804. In this case, the protrusion 3803 may include one area having a width that is greater than a width of a portion of the protrusion 3803 connected to the other end portion 3802. This is to prevent the protrusion 3803 from falling into the groove 3804 in the circumferential direction of the collector 3800.

For example, the protrusion 3803 may have a wedge shape in which a portion connected to the other end portion 3802 has a narrow width. Due to such a structure of the protrusion 3803 and the groove 3804, one end portion 3801 and the other end portion 3802 are fixed without being separated from each other in the width direction as well as in the circumferential direction.

In a state in which the one end portion 3801 and the other end portion 3802 are separated from each other, in a radial direction, the protrusion 3803 may be fitted into and coupled to the groove 3804 through caulking. In this case, the one end portion 3801 and the other end portion 3802 may include a curved surface.

Meanwhile, the collector 3800 may be divided into a first area A31 including a flat surface and a second area A32 including a curved surface. The first area A31 may correspond to bodies 3812, 3813, 3822, and 3823 of the collector 3800, and the second area A32 may correspond to extension portions 3811 and 3821 of the collector 3800. A width K31 of one end portion 3801 and a width K31 of the other end portion 3802 may be greater than a width K32 of the first area A31 and a width K32 of the second area A32. Accordingly, one end portion 3801 and the other end portion 3802 may protrude further than the first area A31 or the second area A32 in the width direction of the collector 3800. Protruding areas of the one end portion 3801 and the other end portion 3802 may increase a coupling force between a housing 3700 and the collector 3800.

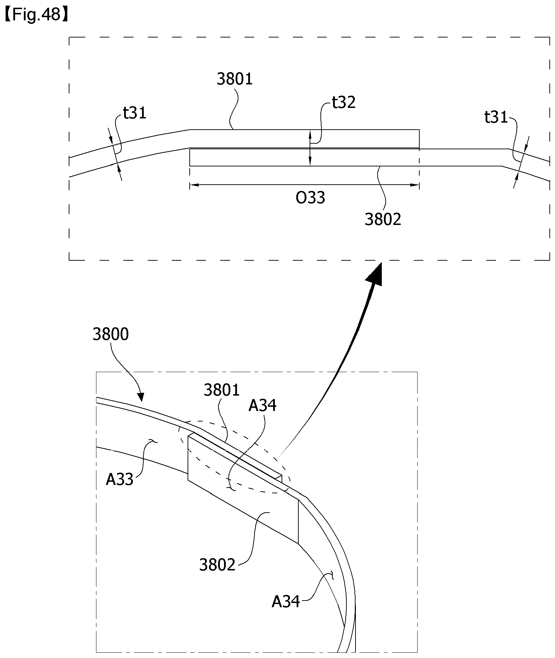

FIG. 48 is a view illustrating one end portion and the other end portion of a collector according to another modified example.

Referring to FIG. 48, in a collector 3800 according to another modified example, a first direction may correspond to a radial direction of the collector 3800. One end portion 3801 and the other end portion 3802 of the collector 3800 may be disposed to form an overlap area O33 in the radial direction of the collector 3800. One end portion 3801 and the other end portion 3802 may each have a flat surface to be suitable for welding.

A third area A33 and a fourth area A34 may be defined according to a thickness of the collector 3800 . A thickness t32 of the fourth area A34 is greater than a thickness t31 of the third area A33. The fourth area A34 corresponds to the overlap area O33 of the one end portion 3801 and the other end portion 3802 in the radial direction. In a state in which one end portion 3801 and the other end portion 3802 of the collector 3800 are in contact with each other, welding may be performed on one end portion 3801 and the other end portion 3802 to connect the collector 3800 in an annular shape.

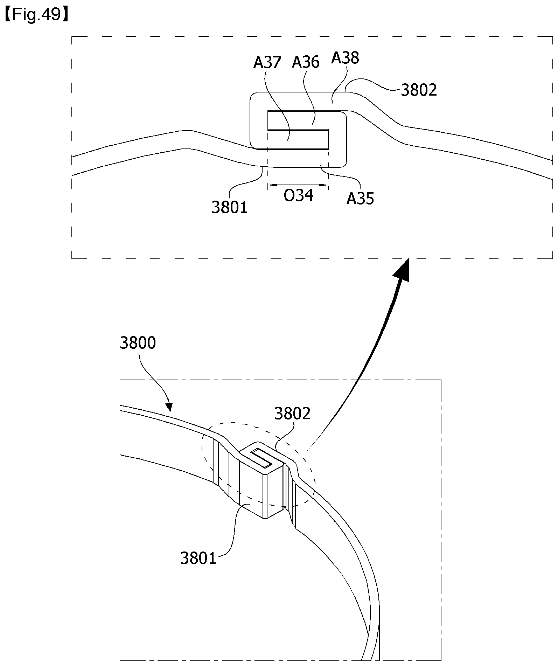

FIG. 49 is a view illustrating one end portion and the other end portion of a collector according to still another modified example.

Referring to FIG. 49, in a collector 3800 according to still another modified example, a first direction may correspond to a radial direction of the collector 3800. One end portion 3801 of the collector 3800 may include a fifth area A35 and a sixth area A36 disposed to overlap each other in the radial direction. The other end portion 3802 of the collector 3800 may include a seventh area A37 and an eighth area A38 disposed to overlap each other in the radial direction of the collector 3800.

In this case, one end portion 3801 and the other end portion 3802 may be alternately arranged in the radial direction. For example, a fifth area A35, the seventh area A37, a sixth area A36, and the eighth area A38 may be sequentially disposed outward in the radial direction.

Such a collector 3800 may be implemented through a forming process (seaming) in which one end portion 3801 and the other end portion 3802 are bent and are pressed and bonded to overlap each other. In this case, the one end portion 3801 and the other end portion 3802 have ring structures which engage each other. One end portion 3801 and the other end portion 3802 are coupled to each other through the ring structures, and thus the collector 3800 may be connected in an annular shape.

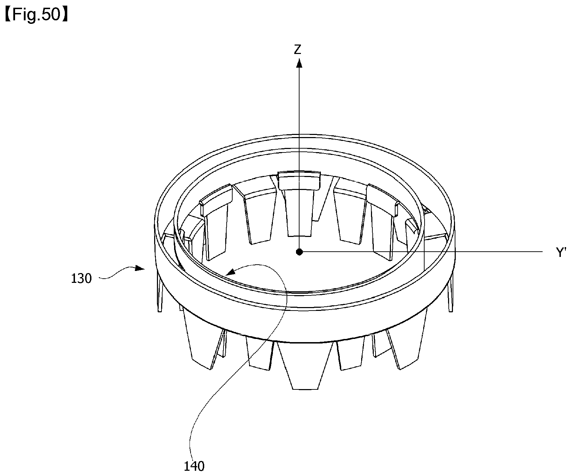

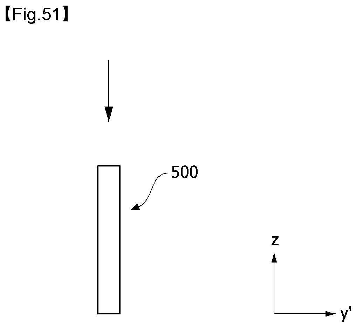

FIG. 50 is a view illustrating directionality of an external magnetic field with respect to stator teeth 130 and 140, and FIG. 51 is a view illustrating an avoidance state of a sensor 500 with respect to an external magnetic field having z-axis directionality.

Referring to FIG. 50, the external magnetic field significantly affects a sensing device in a y'-axis direction perpendicular to a z-axis direction which is an axial direction.

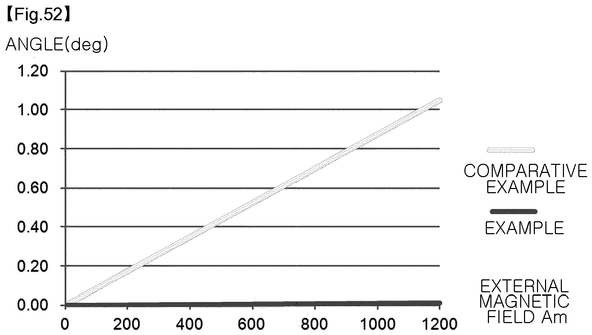

Referring to FIG. 52, the sensor 500 of the sensing device according to the embodiment is disposed in a state of being erected in the z-axis direction. Therefore, an area of the sensor 500 viewed along a z-axis is much smaller than an area of the sensor 500 viewed along a y'-axis. Therefore, the sensing device according to the embodiment has an advantage in that an influence of an external magnetic field on the sensor 500 is inevitably small in the z-axis direction.

Referring to FIGS. 50 and 51, in consideration of a state in which the sensor 500 is erected in the z-axis direction, an external magnetic field in the y'-axis direction may significantly affect the sensor 500. However, since the external magnetic field in the y'-axis direction is guided along a first stator tooth 130 and a second stator tooth 140, the external magnetic field flows without affecting the sensor 500. Therefore, the sensing device according to the embodiment has an advantage in that an influence of an external magnetic field on the sensor 500 is small even in the y'-axis direction.

FIG. 52 is a graph showing a comparison between changes in angle of Comparative Example and Example in response to an external magnetic field in a z-axis direction.

Referring to FIG. 52, Comparative Example of FIG. 52 relates a sensing device having a structure in which stator teeth 130 and 140 are vertically disposed and a sensor 500 is disposed to lie down. As the external magnetic field in the z-axis direction increases, a change amount of an angle increases linearly, and thus it can be seen that a measurement angle significantly changes according to the external magnetic field.

On the other hand, in the case of Example, even when the external magnetic field in the z-axis direction increases, there is little change in angle, and thus it can be seen that a sensing device is not affected by the external magnetic field.

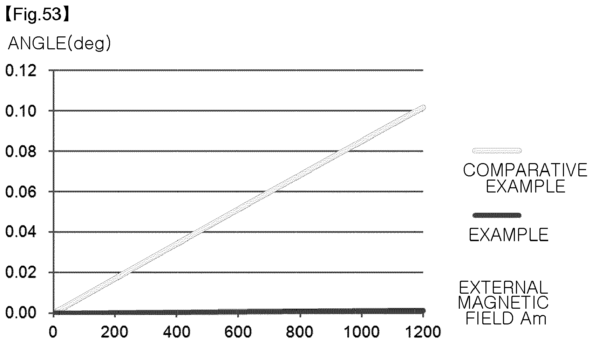

FIG. 53 is a graph showing a comparison between changes in angle of Comparative Example and Example in response to an external magnetic field in a y'-axis direction.

Referring to FIG. 53, Comparative Example of FIG. 53 relates a sensing device having a structure in which stator teeth 130 and 140 are vertically disposed and a sensor 500 is disposed to lie down. As the external magnetic field in the y'-axis direction increases, a change amount of an angle increases linearly, and thus it can be seen that a measurement angle significantly changes according to the external magnetic field.

On the other hand, in the case of Example, even when the external magnetic field in the y'-axis direction increases, there is little change in angle, and thus it can be seen that a sensing device is not affected by the external magnetic field.

The present invention can be applied to various devices such as vehicles or home appliances.

## Claims

1. A sensing device comprising:
a stator; and
a rotor including a magnet,
wherein:
the stator includes a first stator tooth, a second stator tooth, and a collector disposed between the first stator tooth and the second stator tooth; and
the collector includes a first collector and a second collector having a length that is different from that of the first collector.

2. A sensing device comprising:
a stator; and
a rotor including a magnet,
wherein:
the stator includes a first stator tooth, a second stator tooth, and a collector disposed between the first stator tooth and the second stator tooth;
the collector includes a first collector and a second collector;
the first collector includes a first area including a flat surface and a second area including a curved surface;
the second collector includes a third area including a flat surface and a fourth area including a curved surface; and
the first area and the third area are disposed to correspond to each other.

3. The sensing device of claim 1, wherein:
the first collector includes a first area including a flat surface and a second area including a curved surface;
the second collector includes a third area including a flat surface and a fourth area including a curved surface; and
the first area and the third area are disposed to correspond to each other.

4. A sensing device comprising:
a stator including a stator tooth; and
a rotor including a magnet,
wherein:
the stator tooth includes a first stator tooth and a second stator tooth disposed to overlap the first stator tooth in a radial direction from a center of the stator;
the first stator tooth includes a first body, a plurality of first teeth protruding from the first body, and a plurality of first extension portions extending from the first body;
the second stator tooth includes a plurality of second teeth;
one of the plurality of first teeth is disposed to overlap one of the plurality of second teeth in the radial direction; and
the first extension portion is disposed to overlap the magnet in an axial direction.

5. The sensing device of claim, 4, wherein:
the first stator tooth includes a third tooth; and
the third tooth protrudes from the first extension portion and is disposed to overlap the magnet in the radial direction.

6. A sensing device comprising:
a stator including a first stator tooth and a second stator tooth;
a rotor including a magnet;
a collector disposed between the first stator tooth and the second stator tooth;
a sensor disposed to correspond to the collector;
a connector pin connected to an external power source;
a plurality of plates configured to electrically connect the sensor and the connector pin; and
a housing in which the collector and the connector pin are disposed,
wherein:
the plate includes a first surface, a second surface, and a third surface of which positions are different from each other; and
the first surface, the second surface, and the third surface are each in contact with the housing.

7. A sensing device comprising:
a stator including a first stator tooth and a second stator tooth;
a rotor including a magnet;
a collector disposed between the first stator tooth and the second stator tooth;
a sensor disposed to correspond to the collector;
a connector pin connected to an external power source;
a plurality of plates configured to electrically connect the sensor and the connector pin; and
a housing in which the collector and the connector pin are disposed,
wherein:
the plurality of plates are disposed apart from each other; and
the housing includes a partition wall disposed between the adjacent plates.

8. The sensing device of claim 6, wherein:
the first surface and the second surface are disposed to face each other; and
the third surface connects the first surface and the second surface.

9. A sensing device comprising:
a stator; and
a rotor including a magnet,
wherein:
the stator includes a first stator tooth, a second stator tooth, and a collector disposed between the first stator tooth and the second stator tooth;
the collector is formed so that one end portion and the other end portion of the collector are connected in contact with each other; and
the one end portion and the other end portion are disposed to overlap each other in a first direction.

10. The sensing device of claim 9, wherein:
the first direction is a width direction of the collector; and
the collector includes a protrusion protruding from the other end portion and a groove which is formed to be concave from the one end portion and in which the protrusion is disposed.
